# EUROPEAN PATENT APPLICATION

(11) **EP 3 889 110 A1**
(43) Date of publication of application: **06.10.2021**
(21) Application number: 20746835.6
(22) Date of filing: 22.01.2020
(51) Int. Cl.: C01F 11/18, C25B 1/04, C25B 1/26, B01D 53/14, C01B 32/50, C25B 1/34, C25B 15/08, B05B 1/00

(54) **METHOD FOR FIXING CARBON DIOXIDE, METHOD FOR PRODUCING FIXED CARBON DIOXIDE, AND DEVICE FOR FIXING CARBON DIOXIDE**

(71) Applicant: Sorimachi, Kenji, Takasaki-shi, Gunma 370-0041 (JP); Shinko Sangyo Co., Ltd., Takasaki-shi Gunma 370-0871 (JP)
(72) Inventor: SORIMACHI, Kenji, Takasaki-shi, Gunma 3700041 (JP)
(74) Representative: J A Kemp LLP
(86) International application number: PCT/JP2020/002064
(87) International publication number: WO 2021/149176

(57) **Abstract**

The present invention provides a new method for fixing carbon dioxide. A method for fixing carbon dioxide, includes: a contact step of bringing a mixed liquid containing at least one of sodium hydroxide or potassium hydroxide and further containing at least one of a chloride of a Group 2 element or a chloride of a divalent metal element into contact with a gas containing carbon dioxide; and an electrolysis step of electrolyzing the mixed liquid after the contact to prepare a mixed liquid after the electrolysis. In the contact step, the mixed liquid after the electrolysis is reused as the mixed liquid.

## Description

### TECHNICAL FIELD

The present invention relates to a method for fixing carbon dioxide, a method for producing fixed carbon dioxide, and a carbon dioxide fixation apparatus.

### BACKGROUND ART

As a method for fixing carbon dioxide, for example, Patent Literature 1 describes a method for producing sodium carbonate by reacting an aqueous sodium hydroxide solution with a combustion exhaust gas containing carbon dioxide. However, new methods for fixing carbon dioxide are required.

### Citation List

### Patent Literature

Patent Literature 1: JPH6(1994)-263433 A

### SUMMARY OF INVENTION

### Technical Problem

With the foregoing in mind, it is an object of the present invention to provide a new method for fixing carbon dioxide.

### Solution to Problem

In order to achieve the above object, the present invention provides a method for fixing carbon dioxide, including: a contact step of bringing a mixed liquid containing at least one of sodium hydroxide or potassium hydroxide and further containing at least one of a chloride of a Group 2 element or a chloride of a divalent metal element into contact with a gas containing carbon dioxide; and an electrolysis step of electrolyzing the mixed liquid after the contact to prepare a mixed liquid after the electrolysis, wherein, in the contact step, the mixed liquid after the electrolysis is reused as the mixed liquid.

The present invention also provides a method for producing fixed carbon dioxide, including: a fixation step of fixing carbon dioxide, wherein the fixation step is carried out by the method for fixing carbon dioxide according to the present invention.

The present invention also provides a carbon dioxide fixation apparatus, including: a reaction vessel; a carbon dioxide fixing agent feeding unit; and a gas-liquid mixing unit, wherein the carbon dioxide fixing agent feeding unit can feed the carbon dioxide fixing agent into the reaction vessel, the reaction vessel includes a reaction chamber and an electrolysis chamber, the reaction chamber can contain a carbon dioxide fixing agent, the gas-liquid mixing unit can mix a gas containing carbon dioxide into the carbon dioxide fixing agent contained in the reaction chamber, the electrolysis chamber includes an anode chamber and a cathode chamber, a liquid can be fed from the reaction chamber to the electrolysis chamber and from the electrolysis chamber to the reaction chamber, the carbon dioxide fixing agent and carbon dioxide are reacted with each other in the reaction chamber, the carbon dioxide fixing agent after the reaction can be fed from the reaction chamber to the electrolysis chamber, the carbon dioxide fixing agent after the reaction is electrolyzed in the electrolysis chamber, the carbon dioxide fixing agent after the electrolysis can be fed from the electrolysis chamber to the reaction chamber, and the carbon dioxide fixing agent after the electrolysis is reusable as the carbon dioxide fixing agent in the reaction chamber.

### Advantageous Effects of Invention

The present invention can provide a new method for fixing carbon dioxide.

### BRIEF DESCRIPTION OF DRAWINGS

[FIG. 1] FIG. 1 is a schematic cross-sectional view showing an example of the carbon dioxide fixation apparatus of the second embodiment.
[FIG. 2] FIG. 2 is a schematic cross-sectional view showing an example of the carbon dioxide fixation apparatus of Variation 1.
[FIGs. 3A and 3B] FIGs. 3A and 3B are schematic cross-sectional views showing an example of the carbon dioxide fixation apparatus of Variation 2.
[FIGs. 4A and 4B] FIGs. 4A and 4B are schematic cross-sectional views showing an example of the carbon dioxide fixation apparatus of the third embodiment.
[FIGs. 5A and 5B] FIGs. 5A and 5B are schematic cross-sectional views showing an example of the carbon dioxide fixation apparatus of the fourth embodiment.
[FIG. 6] FIG. 6 is a diagram showing an electrolysis apparatus in Example 1.
[FIG. 7] FIG. 7 is a photograph of a mixed liquid of a sodium chloride solution and a calcium chloride solution that has been electrolyzed after contact with carbon dioxide in Example 1.
[FIG. 8] FIG. 8 is a diagram showing an electrolysis apparatus in Example 2.
[FIG. 9] FIG. 9 is a graph showing the weight of the precipitate produced in the mixed liquid due to contact with carbon dioxide in Example 2.
[FIG. 10] FIG. 10 is a graph showing the carbon dioxide concentration in the vessel after contact in Example 2.
[FIG. 11] FIG. 11 is a graph showing the carbon dioxide concentration in the vessel after contact in Example 2.
[FIG. 12] FIG. 12 is a graph showing the weight of calcium carbonate adhered to an air stone in Example 3.
[FIG. 13] FIG. 13 is a photograph of air stones after contact in Example 4.
[FIG. 14] FIG. 14 is a graph showing the weight of calcium carbonate adhered to an air stone in Example 4.
[FIG. 15] FIG. 15 is a photograph of mixed liquids containing sodium hydroxide and calcium chloride before and after contact with carbon dioxide in Reference Example 1.
[FIG. 16] FIG. 16 is a graph showing the weight of the precipitate produced in the mixed liquid due to contact with carbon dioxide in Reference Example 1.
[FIG. 17] FIG. 17 is a graph showing the weight of the precipitate produced in the mixed liquid due to contact with carbon dioxide in Reference Example 1.
[FIG. 18] FIG. 18 is a photograph of mixed liquids containing sodium hydroxide and calcium chloride in Reference Example 2.
[FIG. 19] FIG. 19 is a graph showing the carbon dioxide concentration in the vessel after contact in Reference Example 3.
[FIGs. 20A and 20B] FIGs. 20A and 20B are diagrams showing a shape of an octagonal prism plastic bottle in Reference Example 3.
[FIG. 21] FIG. 21 is a graph showing the carbon dioxide concentration in the vessel after contact in Reference Example 3.
[FIG. 22] FIG. 22 is a graph showing the carbon dioxide concentration in the vessel after contact in Reference Example 3.
[FIG. 23] FIG. 23 is a diagram showing a state where contact is carried out by spraying in Reference Example 4.
[FIG. 24] FIG. 24 is a graph showing the carbon dioxide concentration in the vessel after contact in Reference Example 4.
[FIG. 25] FIG. 25 is a diagram showing a contact unit in Reference Example 4.
[FIG. 26] FIG. 26 is a graph showing the carbon dioxide concentration in the vessel after contact in Reference Example 4.
[FIG. 27] FIG. 27 is a graph showing the weight of the precipitate produced in the mixed liquid due to contact with carbon dioxide in Reference Example 5.
[FIG. 28] FIG. 28 is a graph showing the weight of the precipitate produced in the mixed liquid due to contact with carbon dioxide in Reference Example 5.
[FIG. 29] FIG. 29 is a graph showing the weight of the precipitate produced in the mixed liquid due to contact with carbon dioxide in Reference Example 6.
[FIG. 30] FIG. 30 is a graph showing the weight of the precipitate produced in the mixed liquid due to contact with carbon dioxide in Reference Example 7.
[FIG. 31] FIG. 31 is a diagram showing a state where contact is performed by shaking in Reference Example 3.
[FIG. 32] FIG. 32 is a graph showing the carbon dioxide concentration in the vessel after contact in Reference Example 3.
[FIG. 33] FIG. 33 is a diagram showing a state where contact is performed by bubbling in Reference Example 8.
[FIG. 34] FIG. 34 is a graph showing the weight of the precipitate produced in the mixed liquid due to contact with carbon dioxide in Reference Example 8.
[FIG. 35] FIG. 35 is a schematic diagram for explaining the form of a pipe in Reference Example 8.
[FIG. 36] FIG. 36 is a graph showing the carbon dioxide concentration in the vessel after contact in Reference Example 8.
[FIG. 37] FIG. 37 is a graph showing the carbon dioxide concentration in the vessel after contact in Reference Example 8.
[FIG. 38] FIG. 38 is a graph showing the carbon dioxide concentration in the vessel after contact in Reference Example 8.
[FIG. 39] FIG. 39 is a graph showing the carbon dioxide concentration in the vessel after contact in Reference Example 8.
[FIG. 40] FIG. 40 is a graph showing the carbon dioxide concentration in the vessel after contact in Reference Example 9.
[FIG. 41] FIG. 41 is a diagram showing a state where contact is performed by bubbling in Reference Example 9.
[FIG. 42] FIG. 42 is a graph showing the carbon dioxide concentration in the vessel after contact in Reference Example 9.
[FIG. 43] FIG. 43 is a graph showing the carbon dioxide concentration in the vessel after contact in Reference Example 9.
[FIG. 44] FIG. 44 is a graph showing the weight of the precipitate produced in the mixed liquid due to contact with carbon dioxide in Reference Example 10.
[FIG. 45] FIG. 45 is a graph showing the carbon dioxide concentration in the vessel after contact in Reference Example 10.
[FIG. 46] FIG. 46 is a graph showing the weight of the precipitate produced in the mixed liquid due to contact with carbon dioxide in Reference Example 11.
[FIG. 47] FIG. 47 is a schematic diagram showing a carbon dioxide fixation apparatus in Reference Example 12.

### DESCRIPTION OF EMBODIMENTS

In the method for fixing carbon dioxide of the present invention, for example, at least one of the chloride of a Group 2 element or the chloride of a divalent metal element is calcium chloride.

In the method for fixing carbon dioxide of the present invention, for example, in the contact step, the mixed liquid and the gas are brought into contact with each other by feeding the gas into the mixed liquid.

In the method for fixing carbon dioxide of the present invention, for example, at least one of the sodium hydroxide or the potassium hydroxide is sodium hydroxide, and a concentration of the sodium hydroxide in the mixed liquid is less than 0.2 N.

The method for fixing carbon dioxide of the present invention further includes, for example, a concentration adjustment step of detecting a pH of the mixed liquid and maintaining the concentration of the sodium hydroxide in the mixed liquid at less than 0.2 N based on the detected pH.

In the method for fixing carbon dioxide of the present invention, for example, at least one of the sodium hydroxide or the potassium hydroxide is sodium hydroxide, and the concentration of the sodium hydroxide in the mixed liquid is 0.05 N or more.

In the method for fixing carbon dioxide of the present invention, for example, at least one of the chloride of a Group 2 element or the chloride of a divalent metal element is calcium chloride, and a concentration of the calcium chloride in the mixed liquid is 0.05 mol/l or more.

In the method for fixing carbon dioxide of the present invention, for example, a temperature of the mixed liquid is 70°C or more.

In the method for fixing carbon dioxide of the present invention, for example, the contact step includes: a first contact step of bringing a solution containing at least one of sodium hydroxide or potassium hydroxide into contact with a gas containing carbon dioxide; and a second contact step of adding at least one of a chloride of a Group 2 element or a chloride of a divalent metal element to the solution after the first contact step. In the electrolysis step, after the second contact step, a mixed liquid containing the solution containing at least one of sodium hydroxide or potassium hydroxide and containing at least one of the chloride of a Group 2 element or the chloride of a divalent metal element is electrolyzed, and in the first contact step, the mixed liquid after the electrolysis is reused as the solution containing at least one of sodium hydroxide or potassium hydroxide.

In the carbon dioxide fixation apparatus of the present invention, for example, the gas-liquid mixing unit is inserted into the reaction chamber, a plurality of holes are provided at an insertion end portion, and the gas can be discharged from the plurality of holes into the carbon dioxide fixing agent in the reaction chamber.

In the carbon dioxide fixation apparatus of the present invention, for example, the gas-liquid mixing unit includes a liquid circulation flow path and a pump, the liquid circulation flow path includes a liquid suction end portion and a liquid discharge end portion, the liquid suction end portion is inserted into the electrolysis chamber, the liquid discharge end portion is inserted into the reaction chamber, the pump can suck the carbon dioxide fixing agent from the liquid suction end portion and can discharge the sucked carbon dioxide fixing agent from the liquid discharge end portion.

In the carbon dioxide fixation apparatus of the present invention, for example, the liquid circulation flow path further includes a gas-liquid mixing member, and the gas-liquid mixing member can mix the gas into a liquid flowing through the liquid circulation flow path.

In the carbon dioxide fixation apparatus of the present invention, for example, the reaction vessel includes a first reaction vessel and a second reaction vessel, the first reaction vessel includes the reaction chamber, and the second reaction vessel includes the electrolysis chamber.

In the carbon dioxide fixation apparatus of the present invention, for example, the gas-liquid mixing unit is inserted into the reaction chamber, and an insertion end portion is coated with at least one of a water repellent or an electronegative material.

In the present invention, "fixation of carbon dioxide (also referred to as fixation)" means, for example, reducing the carbon dioxide concentration in a gas containing carbon dioxide by removing carbon dioxide from the gas.

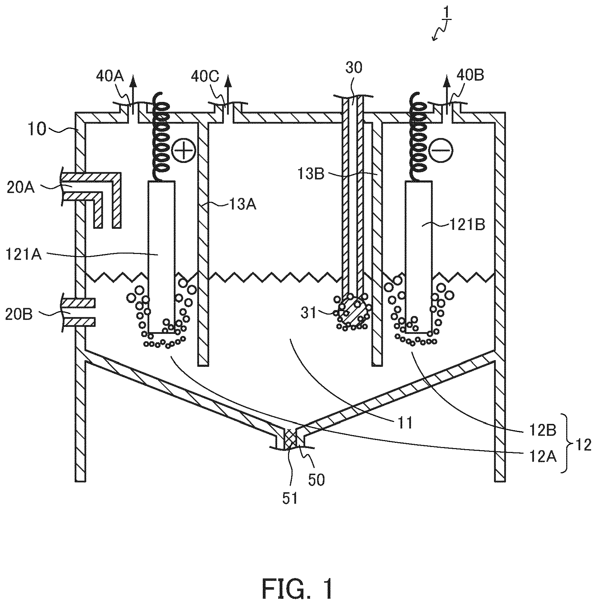

Embodiments of the present invention will be described below. The present invention, however, is not limited to the following embodiments. In FIGs. 1 to 47, identical parts are indicated with identical reference signs. Regarding the descriptions of the embodiments, reference can be made to one another unless otherwise stated. Furthermore, the configurations of the embodiments can be combined unless otherwise stated. Terms used in the present specification each have a meaning commonly used in the art, unless otherwise stated.

### First Embodiment

### (Method for fixing carbon dioxide)

The method for fixing carbon dioxide of the present invention, includes: a contact step of bringing a mixed liquid containing at least one of sodium hydroxide (NaOH) or potassium hydroxide (KOH) and further containing at least one of a chloride of a Group 2 element (alkaline earth metal) or a chloride of a divalent metal element into contact with a gas containing carbon dioxide (CO₂); and an electrolysis step of electrolyzing the mixed liquid after the contact to prepare a mixed liquid after the electrolysis. In the contact step, the mixed liquid after the electrolysis is reused as the mixed liquid. In the method for fixing carbon dioxide of the present invention, other configurations and conditions are not particularly limited.

Examples of the Group 2 element include beryllium, magnesium, calcium, strontium, barium, and radium. Among them, the Group 2 element may be calcium, magnesium, strontium, or barium. Examples of the chloride of a Group 2 element include calcium chloride, magnesium chloride, strontium chloride, and barium chloride.

The divalent metal element is not particularly limited, and may be, for example, zinc. The chloride of a divalent metal element may be, for example, zinc chloride.

The present invention will be described below with reference to an example in which the mixed liquid contains sodium hydroxide as at least one of sodium hydroxide (NaOH) and potassium hydroxide (KOH), and contains calcium chloride as the chloride of a Group 2 element (alkaline earth metal). The present invention, however, is not limited thereto.

First, the contact step will be described below. In the contact step, a mixed solution containing sodium hydroxide (NaOH) and further containing calcium chloride (CaCl₂) is brought into contact with a gas containing carbon dioxide (CO₂). In the contact step, other configurations and conditions are not particularly limited.

It is to be noted that, in the method for fixing carbon dioxide of the present invention, as will be described below, the electrolysis step electrolyzes the mixed liquid after the contact to prepare the mixed liquid after the electrolysis. Then, in the contact step, the mixed liquid after the electrolysis is reused as the mixed liquid.

According to the method for fixing carbon dioxide of the present invention, by including the contact step, carbon dioxide can be fixed by reacting sodium hydroxide and calcium chloride with carbon dioxide to produce calcium carbonate (CaCO₃). According to the present invention, for example, carbon dioxide can be fixed in a solid state. Thus, for example, carbon dioxide can be fixed in a more stable state. In addition, for example, handling is facilitated.

The gas containing carbon dioxide is not particularly limited, and examples thereof include flue gas, indoor air, and air.

The carbon dioxide concentration in the gas containing carbon dioxide is not particularly limited, and is, for example, 0 to 100%. As will be described below, according to the present invention, even carbon dioxide at a low concentration can be fixed. Further, since a white precipitate is formed in the mixed liquid by bubbling 100% carbon dioxide, the present invention brings about an effect even in carbon dioxide fixation at a high concentration.

The temperature of the gas containing carbon dioxide is not particularly limited, and may be, for example, a low temperature of 0°C or less, a common temperature of atmospheric temperature or room temperature, a temperature of less than 100°C, or a high temperature of 120°C to 200°C. It is to be noted that the temperature of the gas may be a low temperature from the viewpoint of preventing evaporation of water. The present invention, however, can be applied even if the gas containing carbon dioxide is high in heat, for example.

The gas containing carbon dioxide may contain, for example, a substance other than carbon dioxide. The substance other than carbon dioxide is not particularly limited, and examples thereof include SOx, NOx, O₂, and dust. In addition, in the present invention, since the mixed liquid is basically alkaline, for example, it is presumed that a neutralization reaction occurs between the mixed liquid and the acidic substance and the like. The present invention, however, is not limited thereto.

The mixed liquid contains sodium hydroxide and calcium chloride as described above. The method for producing the mixed liquid is not particularly limited, and may be, for example, low concentration mixing. The low concentration may be less than 5 N as the concentration of sodium hydroxide before the mixing, for example. By the low concentration mixing, for example, the precipitate of calcium hydroxide (Ca(OH)₂) can be prevented from forming. Specifically, the mixed liquid can be produced, for example, by feeding a 0.1 N sodium hydroxide solution and a 0.1 mol/l calcium chloride solution into a vessel, and then mixing them.

In the mixed liquid, the concentration of the sodium hydroxide is not particularly limited, and is, for example, 0.01 N or more or 0.05 N or more and 0.2 N or less, less than 0.2 N, or 0.1 N or less. It is to be noted that the unit "N" of the concentration indicates a normality, and 0.01 N is 0.01 mol/l in the case of sodium hydroxide. When the concentration of the sodium hydroxide is 0.01 N or more or 0.05 N or more, for example, more carbon dioxide can be fixed. Further, when the concentration of the sodium hydroxide is less than 0.2 N or 0. IN or less, for example, more carbon dioxide can be fixed.

It is to be noted that, as will be mentioned in the examples described below, it is presumed that, when the concentration of the sodium hydroxide is 0.2 N or more, a precipitate of calcium hydroxide is produced due to the reaction between calcium chloride and high concentration sodium hydroxide in the contact, thereby decreasing the synthesis amount of calcium carbonate due to the contact.

For this reason, for example, the method for fixing carbon dioxide of the present invention may further include a concentration adjustment step, and the concentration adjustment step may detect the pH of the mixed liquid and maintain the concentration of sodium hydroxide in the mixed liquid at 0.2 N or less based on the detected pH. The detection of the pH can be carried out using a known pH detection unit. In the concentration adjustment step, the correspondence between the detected pH and the concentration of sodium hydroxide can be established, for example, with reference to a value measured in advance. The value measured in advance can be acquired, for example, using a titration curve. Specifically, as an example, when the titration was actually performed, the concentration of sodium hydroxide was pH 13.00 when the concentration of sodium hydroxide was 0.15 N, was pH of 13.17 when the concentration of sodium hydroxide was 0.20 N, was pH of 13.26 when the concentration of sodium hydroxide was 0.25 N, and was pH of 13.32 when the concentration of sodium hydroxide was 0.30 N. Therefore, based on the results of the titration, it can be determined that the concentration of sodium hydroxide is 0.2 N or less when the pH is 13.17 or less in the concentration adjustment step, for example. The present invention, however, is not limited thereto. The adjustment of the concentration of sodium hydroxide in the mixed liquid can be performed by feeding a sodium hydroxide solution and distilled water into the mixed liquid, for example. The sodium hydroxide solution may be, for example, a mixed liquid after the electrolysis after the electrolysis step, which will be described below.

In other words, this means that, according to the method for fixing carbon dioxide of the present invention, even when high concentration sodium hydroxide is contained in the mixed liquid, a precipitate of calcium hydroxide is produced due to the reaction between calcium chloride and the high concentration sodium hydroxide, so that it is possible to reduce the concentration of sodium hydroxide in the mixed liquid. Therefore, according to the method for fixing carbon dioxide of the present invention, even when high concentration (e.g., 0.2 N or more) sodium hydroxide is produced due to high heat, for example, the concentration thereof can be decreased and the generation of harmful gas can be suppressed.

In the mixed liquid, the concentration of the calcium chloride is not particularly limited, and is, for example, 0.005 mol/l or more or 0.05 mol/l or more and 0.5 mol/l or less, less than 0.5 mol/l, or 0.1 mol/l or less. When the concentration of the calcium chloride is within the above range, for example, more carbon dioxide can be fixed.

The temperature of the mixed liquid is not particularly limited, and is, for example, 30°C to 100°C, 70°C or more, 70°C to 80° C, or 70°C. In addition, according to the present invention, as described above, even when high concentration (e.g., 0.2 N or more) sodium hydroxide is produced due to high heat, for example, the concentration can be decreased. Thus, the present invention can be applied, for example, even if the mixed liquid is high in heat.

The pH of the mixed liquid is not particularly limited, and for example, the pH of the mixed liquid containing 0.05 N sodium hydroxide and 0.05 mol/l calcium chloride is about 12. It is to be noted that, when the method for fixing carbon dioxide of the present invention includes the concentration adjustment step, the pH is as described above.

In the contact step, the method of bringing the mixed liquid into contact with the gas containing carbon dioxide is not particularly limited, and examples thereof include a method of bringing the mixed liquid into contact with the gas by feeding the gas into the mixed liquid, a method of bringing the mixed liquid into contact with the gas in a state where the mixed liquid is allowed to stand or a flow is generated in the mixed liquid, a method of bringing the mixed liquid into contact with the gas in a state where the mixed liquid is in a state of mist, and a method of bringing the mixed liquid into contact with the gas in a state where the gas is circulated. Regarding "bringing the mixed liquid into contact with the gas in a state where a flow is generated in the mixed liquid", for example, the mixed liquid may be brought into contact with the gas in a state where the mixed liquid is shaken, or the mixed liquid may be brought into contact with the gas by flowing the mixed liquid through a vessel. When flowing the mixed liquid, the mixed liquid may be flowed in one direction or may be circulated. As will be described below, the mixed liquid may be brought into contact with the gas by a gas-liquid mixing unit including a liquid circulation flow path and a pump.

When the mixed liquid is brought into contact with the gas containing carbon dioxide by feeding the gas into the mixed liquid, "feeding" the gas can be also said as "bubbling" the gas, for example. The bubbling condition is not particularly limited, and for example, 3 ml of 0.1 N sodium hydroxide solution and 3 ml of 0.1 mol/l calcium chloride solution can be added to a 10 ml-test tube and mixed, and then bubbling can be performed in the mixed liquid using carbon dioxide (manufactured by KOIKE SANSO KOGYO CO., LTD.) for 10 seconds (about 20 cm³). It is to be noted that, the bubbling can be performed by ejecting carbon dioxide from the tip of the Pasteur pipette, for example. Further, for example, a bubbling device for aquarium organism (product name: Bukubuku, manufactured by Kotobuki Kogei Co., Ltd.) can be used. For example, a bubbling device (product name: Micro bubbler (F-1056-002) manufactured by Front Industry Co., Ltd.) can also be used. The time for performing the bubbling may be appropriately set, for example, in a range in which the precipitate formed does not disappear by further reaction, and may be, for example, 5 to 60 seconds, 5 to 40 seconds, 5 to 30 seconds, 1 to 2 minutes, 1.5 hours, 9 hours, or 12 hours.

In the contact step, by feeding the gas into the mixed liquid, the gas can be fed into the mixed liquid as a bubble. The size (diameter) of the bubble depends on the size of the inlet through which the gas is fed, for example. When the gas is fed from a porous structure, the size of the bubble depends on the size of the pores of the porous structure, for example.

The size, number concentration, and the like of the bubbles (foam) can be appropriately set, and are not particularly limited. The size of the bubble can be, for example, of the order of centimeters, millimeters, micrometers, and nanometers. The bubble includes, for example, a fine bubble. The fine bubble is a bubble having a sphere equivalent diameter of 100 µm or less. The fine bubbles include microbubbles having a diameter of 1 to 100 µm and ultrafine bubbles (also referred to as nanobubbles) having a diameter of 1 µm or less. By setting the bubble to a small size such as a fine bubble, for example, the surface area of the bubble can be made larger, and the reaction in the contact step can be promoted. By setting the bubble to a size larger than that of the fine bubble, for example, the gas pressure required for the feeding of the gas can be reduced.

The size of the bubble can be measured, for example, by a general method. Specifically, for example, the size of the bubble can be measured by taking a photograph of the bubble with a predetermined scale, and comparing the size of the bubble in the photograph with the scale. Furthermore, particle size distribution measurement techniques such as laser diffraction and scattering methods, dynamic light scattering methods, particle trajectory analysis methods, resonant mass measurement methods, electrical detection band methods, dynamic image analysis methods, and light shielding methods can be utilized.

In the contact step, when the mixed liquid is brought into contact with the gas in a state where the mixed liquid is allowed to stand, the contact condition is not particularly limited. For example, the inside of a 2 l-PET bottle (commercially available one) having a common shape is brought into equilibrium with air, and then 10 ml of the mixed liquid is added to the PET bottle, thereby allowing the PET bottle to stand with its bottom facing down. The contact time may be, for example, 15 minutes, 30 minutes, 60 minutes, or overnight after the contact.

In the contact step, regarding "bringing the mixed liquid into contact with the gas in a state where a flow is generated in the mixed liquid", for example, the mixed liquid may be brought into contact with the gas in a state where the mixed liquid is shaken, the mixed liquid may be brought into contact with the gas by flowing the mixed liquid through a vessel, or the mixed liquid may be brought into contact with the gas by adding the mixed liquid (for example, by showering or spraying) from an upper part (such as a ceiling) of the vessel or the like to the space in the vessel.

In the contact step, when the mixed liquid is brought into contact with the gas in a state where the mixed liquid is shaken, the shaking condition is not particularly limited. For example, an octagonal prismatic plastic bottle (commercially available one) containing 10 ml of the mixed liquid can be shaken using a shaker (BR-21UM, manufactured by TAITEK Corporation) at 120 rpm. Furthermore, for example, a 2 l-vessel containing 50 ml of the mixed liquid can be vigorously shaken by an adult male hand 1 to 4 times with a shaking of 30 seconds as a single shake. The 1 to 4 shakes may be performed, for example, immediately after, 30 seconds after, 2 minutes after, 5 minutes after, or 4 hours after the contact.

In the contact step, when the mixed liquid is brought into contact with the gas in a state where the mixed liquid is in a state of mist, the contact condition is not particularly limited. For example, about 4 ml of the mixed liquid can be sprayed into a 2 l-vessel containing the gas 10 times at 5 second intervals using a sprayer (commercially available one). The mixed liquid in a state of mist may be added, for example, by showering or spraying from the upper part of the vessel to the space in the vessel.

The contact step may include a first contact step and a second contact step, wherein the first contact step may bring a solution containing sodium hydroxide into contact with a gas containing carbon dioxide, and the second contact step may add calcium chloride to the solution after the first contact step, for example.

The first contact step may bring a solution containing sodium hydroxide into contact with a gas containing carbon dioxide. By the reaction between the sodium hydroxide and carbon dioxide in the first contact step, sodium hydrogen carbonate (NaHCO₃) or sodium carbonate (Na₂CO₃) is produced, and thus carbon dioxide can be fixed (absorbed).

In the first contact step, calcium chloride is not yet added. Therefore, according to the present invention, even when high concentration (e.g., 0.2 N or more) sodium hydroxide is used in the first contact step, for example, calcium hydroxide due to reaction with calcium chloride is not produced. Thus, in the subsequent second contact step, calcium hydroxide can be prevented from being produced due to the reaction between calcium chloride and a high concentration sodium hydroxide, and more carbon dioxide can be fixed.

According to the first contact step, for example, the concentration of sodium hydroxide can be 0.2 N or less, less than 0.2 N, or 0.1 N or less. Thus, for example, in the second contact step, the formation of calcium hydroxide can be suppressed, and more carbon dioxide can be fixed.

In the first contact step, a contact unit for bringing the solution into contact with the gas containing carbon dioxide is not particularly limited, and reference can be made to the description as to the method for bringing the mixed liquid into contact with the gas containing carbon dioxide described above.

The second contact step adds calcium chloride to the solution after the first contact step. By reacting sodium hydrogen carbonate or sodium carbonate produced by the first contact step with calcium chloride by the second contact step, calcium carbonate is produced, and carbon dioxide can be fixed.

In the second contact step, contact with the gas containing carbon dioxide may be terminated. Further, the second contact step may be performed while contacting with the gas containing carbon dioxide.

In the second contact step, the concentration of the calcium chloride in the mixed liquid after the addition is not particularly limited, and is, for example, 0.005 mol/l or more or 0.05 mol/l or more, and 0.5 mol/l or less, less than 0.5 mol/l, or 0.1 mol/l or less. When the concentration of the calcium chloride is within the above range, for example, more carbon dioxide can be fixed.

In the second contact step, the pH of the mixed liquid after the addition is not particularly limited, and for example, the pH of the mixed liquid containing 0.05 N sodium hydroxide and 0.05 mol/l calcium chloride is about 12.

The method for fixing carbon dioxide of the present invention may further include a dilution step, wherein the dilution step may dilute the solution after the first contact step, for example. The method for diluting is not particularly limited, and for example, distilled water may be added. The proportion of the dilution can be appropriately set, and can be diluted to, for example, 1/10. By the dilution step, for example, the concentration of sodium hydroxide can be decreased to 0.2 N or less, less than 0.2 N, or 0.1 N or less.

The method for fixing carbon dioxide of the present invention may further include a temperature retention step, wherein the temperature retention step can retain the temperature of the mixed liquid at a high temperature, for example. The high temperature is, for example, 70°C to 100°C, 70°C to 80°C, 70°C or more, or 70°C. The temperature retention step can be performed by a general heating device or the like.

The method for fixing carbon dioxide of the present invention may further include a cooling step, wherein the cooling step may cool the mixed liquid after the contact step, for example. In the cooling step, for example, the mixed liquid at a high temperature can be cooled to 5°C to room temperature. The high temperature is, for example, as described above. The cooling step can be performed by a general cooling device or the like.

The method for fixing carbon dioxide of the present invention may further include a product recovery step, wherein the product recovery step may recover a reaction product in the mixed liquid after the contact step, for example. The reaction product is, for example, calcium carbonate (CaCO₃). The product recovery step can recover, for example, a solid calcium carbonate. The product recovery step may be performed by filtration, for example, with a filter or the like. The filter is not particularly limited, and may be, for example, a non-bleached coffee filter (manufactured by Kanae Shiko Co., Ltd.).

The inventors of the present invention have found that the reaction product produced by the contact step tends to be adhered to a reaction vessel, the gas-liquid mixing unit, or the like. For this reason, the product recovery step may include an admix step of admixing the adhered reaction product into a mixed liquid, and a separation step of separating the admixed reaction product. The admix step may scrape off the reaction product or solubilize the reaction product using an agent (e.g., hydrochloric acid (HCl)) or the like, for example.

Regarding a contact unit for bringing a mixed liquid containing sodium hydroxide and calcium chloride into contact with a gas containing carbon dioxide in the contact step, reference can be made to the description as to a carbon dioxide fixation apparatus to be described below.

Next, the electrolysis step is described. The electrolysis step electrolyzes the mixed liquid after the contact to prepare a mixed liquid after the electrolysis. In the electrolysis step, other configurations and conditions are not particularly limited.

According to the method for fixing carbon dioxide of the present invention, by including the electrolysis step, sodium chloride (NaCl) produced in the contact step can be electrolyzed to produce sodium hydroxide (NaOH). Then, the mixed liquid after the electrolysis containing sodium hydroxide is reused in the contact step, so that it can be a method for fixing carbon dioxide in a circulation type.

The electrolysis step is only required to electrolyze sodium chloride (NaCl) produced in the contact step, and the conditions and the like are not particularly limited, and for example, reference can be made to the description of the examples described below. In the electrolysis step, by applying a voltage to the mixed liquid, a reduction reaction is performed at a cathode and an oxidation reaction is performed at an anode, so that sodium chloride in the mixed liquid can be chemically decomposed. Then, chlorine (Cl₂) is produced in the vicinity of the anode, hydrogen (H2) is produced in the vicinity of the cathode, and sodium hydroxide is produced in the mixed liquid after the electrolysis.

Regarding an electrolysis unit that electrolyzes the mixed liquid after the contact to prepare a mixed liquid after the electrolysis in the electrolysis step, reference can be made to the description as to the carbon dioxide fixation apparatus to be described below. In the case of the carbon dioxide fixation apparatus to be described below, the electrolysis chamber is divided into an anode chamber and a cathode chamber by a partition wall. The present invention, however, is not limited thereto, and the electrolysis unit may not use a partition wall (partition film). Specifically, for example, mercury can be used for the cathode without using a partition film after taking the influence on the human body into consideration.

Then, in the method for fixing carbon dioxide of the present invention, as described above, the mixed liquid after the electrolysis is reused as the mixed liquid in the contact step.

In the contact step, a configuration for reusing the mixed liquid after the electrolysis as the mixed liquid is not particularly limited, and reference can be made to the description as to the carbon dioxide fixation apparatus to be described below.

Regarding the contact step and the electrolysis step, for example, the contact step may be performed first, then the electrolysis step may be performed, and thereafter the mixed liquid after the electrolysis may be used in the contact step. In this case, for example, first, a mixed liquid containing sodium hydroxide and further containing calcium chloride is brought into contact with a gas containing carbon dioxide in the first contact step. Next, in the electrolysis step, the mixed liquid after the contact is electrolyzed to prepare a mixed liquid after the electrolysis. Thereafter, in the second contact step, the mixed liquid after the electrolysis is reused as the mixed liquid.

The method for fixing carbon dioxide of the present invention may further include, for example, a step of producing sodium hydroxide by electrolyzing a sodium chloride solution prior to the contact step. In this case, for example, first, sodium hydroxide is produced by the step of electrolyzing the sodium chloride, and then the contact step and the electrolysis step can be performed as described above. In this case, according to the method for fixing carbon dioxide of the present invention, carbon dioxide can be fixed and made into calcium carbonate, hydrogen, and chlorine without preparing sodium hydroxide.

Each of the steps may be performed in the order described above or may be performed in parallel. Each of the steps may be performed repeatedly, for example.

In each of the steps, for example, it may be determined whether or not to proceed to the next step. The determination is not particularly limited, and may be made based on, for example, a measurement value such as a concentration, a pH, a turbidity, a voltage, and a water pressure of a predetermined substance (e.g., sodium hydroxide, carbon dioxide, hydrogen, chlorine) in the carbon dioxide fixing agent or a gas, an elapsed time, and the like. The determination may be performed by a computer or by an operator. When proceeding to the next step, for example, the pumps 53, 70, and 81, the flow rate adjustment units 54, 64, and 82, the anode 121A and the cathode 121B, the carbon dioxide fixing agent feeding units 20A to 20 C, the gas feeding unit 30, and the like to be described below can be operated by a computer, an operator, or the like.

### (Method for producing fixed carbon dioxide)

The method for producing fixed carbon dioxide of the present invention includes a fixation step of fixing carbon dioxide, wherein the fixation step is carried out by the method for fixing carbon dioxide of the present invention as described above. The method for producing fixed carbon dioxide of the present invention is characterized in that it includes the fixation step, and other steps and conditions are not particularly limited. The method for fixing carbon dioxide of the present invention is as described above. The conditions and the like of the fixation step are not particularly limited, and are the same as those described in the method for fixing carbon dioxide of the present invention, for example.

### Second Embodiment

### (Carbon dioxide fixation apparatus)

FIG. 1 is a schematic cross-sectional view showing an example of a carbon dioxide fixation apparatus 1 of the present embodiment as viewed from the lateral direction. In FIG. 1, the inside of the carbon dioxide fixation apparatus 1 is shown in a perspective manner. As shown in FIG. 1, the carbon dioxide fixation apparatus 1 includes a reaction vessel 10, carbon dioxide fixing agent feeding units 20A and 20B, and a gas feeding unit 30 as a gas-liquid mixing unit. The carbon dioxide fixation apparatus 1 also includes gas extraction portions 40A to 40C and a liquid extraction portion 50. In FIG. 1, the carbon dioxide fixing agent to be described below is contained in the reaction vessel 10. Further, a gas containing carbon dioxide is fed from the gas feeding unit 30 into the carbon dioxide fixing agent in a reaction chamber 11. Further, electrolysis of the carbon dioxide fixing agent is performed in an electrolysis chamber 12, whereby bubbles of gas are generated from an anode 121A and a cathode 121B.

As shown in FIG. 1, the reaction vessel 10 includes the reaction chamber 11 and the electrolysis chamber 12. The electrolysis chamber 12 includes an anode chamber 12A and a cathode chamber 12B. In the present embodiment, the anode chamber 12A and the cathode chamber 12B are separated by a partition wall 13A and a partition wall 13B, and the reaction chamber 11 is provided between the partition wall 13A and the partition wall 13B. The anode chamber 12A, the reaction chamber 11, and the cathode chamber 12B are connected to each other at a non-installation portion where the partition wall 13A and the partition wall 13B are not installed. Thereby, liquid can be fed from the reaction chamber 11 to the anode chamber 12A and the cathode chamber 12B, and from the anode chamber 12A and the cathode chamber 12B to the reaction chamber 11. In the carbon dioxide fixation apparatus 1 of the present embodiment, it is also possible that the electrolysis chamber 12 includes the reaction chamber 11.

Since the carbon dioxide fixation apparatus 1 of the present embodiment has the above described configuration, the carbon dioxide fixing agent and carbon dioxide can be reacted in the reaction chamber 11, the carbon dioxide fixing agent after the reaction can be fed from the reaction chamber 11 to the electrolysis chamber 12, the carbon dioxide fixing agent after the reaction can be electrolyzed in the electrolysis chamber 12, the carbon dioxide fixing agent after the electrolysis can be fed from the electrolysis chamber 12 to the reaction chamber 11, and the carbon dioxide fixing agent after the electrolysis can be reused as the carbon dioxide fixing agent in the reaction chamber 11.

The reaction vessel 10 is not particularly limited as long as it can accommodate a carbon dioxide fixing agent in the reaction chamber 11 and can electrolyze the carbon dioxide fixing agent after the reaction in the electrolysis chamber 12. Examples of the material of the reaction vessel 10 include plastic, glass, and ceramic. The material, capacity, size, height, shape, and the like of the reaction vessel 10 can be appropriately set.

The carbon dioxide fixing agent is, for example, a liquid containing at least one of sodium hydroxide (NaOH) and potassium hydroxide (KOH). At least one of the sodium hydroxide and potassium hydroxide is, for example, sodium hydroxide. Further, the carbon dioxide fixing agent may be, for example, a liquid containing at least one of sodium chloride (NaCl) and potassium chloride (KCl). In this case, sodium hydroxide and potassium hydroxide can be produced by electrolysis.

The carbon dioxide fixing agent may include at least one of sodium hydroxide and potassium hydroxide as a first fixing agent, and may further include at least one of a chloride of a Group 2 element (alkaline earth metal) and a chloride of a divalent metal element as a second fixing agent. At least one of the chloride of a Group 2 element and the chloride of a divalent metal element is, for example, calcium chloride (CaCl₂).

The electrolysis chamber 12 includes the anode chamber 12A and the cathode chamber 12B. The anode chamber 12A and the cathode chamber 12B are provided with the anode 121A and the cathode 121B, respectively. The anode 121A and the cathode 121B are not particularly limited and platinum-coated titanium mesh electrodes (manufactured by TANAKA Kikinzoku Kogyo K.K.) can be used, for example. Each of the anode 121A and the cathode 121B is connected to a power supply device (not shown) by a conductor. The power supply device is not particularly limited, and a rectifier YG-1502D+ (manufactured by YAOGONG), a DC power supply device, STP3010H (manufactured by SKYTOPPOWER) and the like can be used, for example.

The partition wall 13A and the partition wall 13B are not particularly limited, and examples of the material thereof include plastic, ceramic, and glass. In the present embodiment, as described above, there is a non-installation portion where the partition wall 13A and the partition wall 13B are not installed, and the anode chamber 12A, the reaction chamber 11, and the cathode chamber 12B are connected to each other at the non-installation portion. The present invention, however, is not limited thereto, and in a case where the partition wall 13A and the partition wall 13B are formed of an ion exchange membrane or the like, the non-installation portion may not be provided.

The carbon dioxide fixing agent feeding units 20A and 20B can feed the carbon dioxide fixing agent into the reaction vessel 10. The carbon dioxide fixing agent feeding units 20A and 20B may be pipes, hoses, and the like. Further, the carbon dioxide fixing agent feeding units 20A and 20B may be openings of the reaction vessel 10, and the carbon dioxide fixing agent can be fed from the opening, for example, by an operator or the like.

In the present variation, the carbon dioxide fixing agent feeding unit 20A is provided at the upper part of the anode chamber 12A and the carbon dioxide fixing agent feeding unit 20B is provided at the lower part of the anode chamber 12A. The present invention, however, is not limited thereto. Further, the carbon dioxide fixation apparatus 1 may include one carbon dioxide fixing agent feeding unit 20.

In the present variation, the carbon dioxide fixing agent feeding units 20A and 20B are provided on the anode chamber 12A side. The present invention, however, is not limited thereto, and the carbon dioxide fixing agent feeding units 20A and 20B may be provided on the cathode chamber 12B side, for example.

In the carbon dioxide fixation apparatus 1 of the present embodiment, as an example, sodium chloride can be fed from the carbon dioxide fixing agent feeding unit 20A, and calcium chloride can be fed from the carbon dioxide fixing agent feeding unit 20B. The present invention, however, is not limited thereto, and it is only required that the carbon dioxide fixing agent feeding units 20A and 20B can feed at least one of the aforementioned carbon dioxide fixing agents. Further, as will be described below, water such as distilled water may be fed.

As described above, the carbon dioxide fixation apparatus 1 of the present embodiment includes the gas feeding unit 30 as the gas-liquid mixing unit. The gas feeding unit 30 is inserted into the reaction chamber 11 as shown in FIG. 1, and a plurality of holes are provided at the insertion end portion 31, and a gas containing carbon dioxide can be fed from the plurality of holes into the carbon dioxide fixing agent in the reaction chamber 11. Thus, the gas can be mixed into the carbon dioxide fixing agent.

The material, length, thickness, and shape of the gas feeding unit 30 can be appropriately set. The gas feeding unit 30 may have a tubular structure such as a pipe, a hose, or the like, for example.

The insertion end portion 31 can be formed of plastic, ceramic, metal, glass, and a porous material, for example. The porous material may be, for example, an air stone. The number, size, and shape of the plurality of holes are not particularly limited, and may be appropriately set according to a desired reaction rate, a gas pressure of the gas, and the like.

In the present embodiment, the insertion end portion 31 is provided at a lower part of the reaction chamber 11. The "lower part" is lower than the liquid level, and may be, for example, a position of the lower half of the space in the first reaction vessel 10. By providing the insertion end portion 31 at a further lower part, for example, the distance between the insertion end portion 31 and the liquid level is increased, so that the distance in which the gas fed from the insertion end portion 31 reaches the liquid level increases, and the reaction amount can be increased.

The insertion end portion 31 is coated with, for example, at least one of a water repellent and an electronegative material. The water repellent may also be referred to as a waterproofing agent. The water repellent has a property of dislike carbonate ion (CO₃²⁻). The electronegative material may be, for example, a negatively charged ion exchange resin. The coating of the insertion end portion 31 can be performed by spraying using a fluororesin waterproof spray (product name: LOCTITE, product number: DBS-422, manufactured by Henkel Japan Ltd.) for several times and being allowed to stand for about 30 minutes, for example. By the coating, it is possible to prevent the reaction product from adhering to the vicinity of the insertion end portion 31, and it is possible to prevent the suppression of the reaction due to the adhesion of the reaction product. It is to be noted that suppression of the reaction due to adhesion of the reaction product does not cause a problem when a gas containing carbon dioxide and a sodium hydroxide solution containing no calcium chloride are brought into contact with each other. On the other hand, when sodium hydroxide and calcium chloride coexist in the solution, due to the contact between the gas containing carbon dioxide and the solution, carbon dioxide and hydroxide ion (OH⁻) react with each other, and carbonate ion (CO₃²⁻) produced by the reaction further reacts with calcium ion (Ca²⁺), thereby producing calcium carbonate. Then, since these reactions are fast reactions, it is considered that the reaction product adheres to the vicinity of the insertion end portion 31. Such adhesion of the reaction product is a problem uniquely found by the inventors of the present invention.

The gas-liquid mixing unit is not particularly limited as long as a gas containing carbon dioxide can be mixed with the carbon dioxide fixing agent contained in the reaction chamber 11. Other examples of the gas-liquid mixing unit will be described below.

The gas extraction portions 40A to 40C can extract gas from the anode chamber 12A, the reaction chamber 11, and the cathode chamber 12B, respectively. The gas extraction portions 40A to 40C may be pipes, hoses, or the like, or may be openings of the reaction vessel 10. From the gas extraction portions 40A and 40B of the anode chamber 12A and the cathode chamber 12B, for example, chlorine (Cl₂) and hydrogen (H₂) can be extracted, respectively. From the gas extraction portion 40C of the reaction chamber 11, for example, a gas containing the carbon dioxide from which carbon dioxide has been removed by the contact with the carbon dioxide fixing agent is discharged.

The liquid extraction portion 50 can extract the carbon dioxide fixing agent, the reaction product, and the like after the reaction contained in the reaction vessel 10. As shown in FIG. 1, the liquid extraction portion 50 is an inclination surface at the bottom of the reaction vessel 10, and a pipe, a hose, or the like is connected to the lowermost portion of the inclined surface. The present invention, however, is not limited thereto as long as the liquid extraction portion 50 can extract the carbon dioxide fixing agent, the reaction product, and the like. Examples of the products include calcium carbonate (CaCO₃) and calcium hydroxide (Ca(OH)₂) as described above.

In the present embodiment, the liquid extraction portion 50 includes a filter 51. The filter 51 may be, for example, a so-called filter press system device that stacks filter cloths and applies pressure to filtrate, a device that places the filter cloths or cartridges in a strainer, or the like. For example, the filter 51 may have a filtration degree of 1 µm or more or 1 µm. Specific examples of the filter 51 include a non-bleached coffee filter (manufactured by Kanae Shiko Co., Ltd.). Since calcium carbonate is solid as described above, for example, when the liquid extraction portion 50 includes the filter 51, it is possible to obtain the solid reaction product after separating from the carbon dioxide fixing agent.

### Variation 1

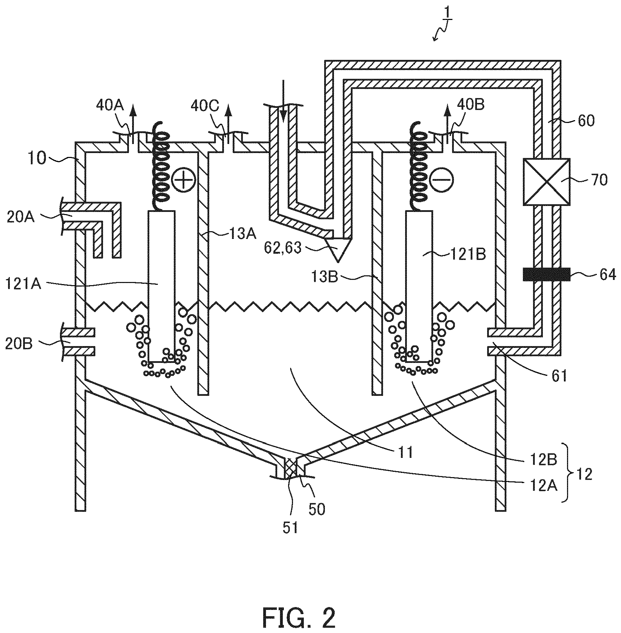

As shown in FIG. 2, the carbon dioxide fixation apparatus 1 of the present variation includes a liquid circulation flow path 60 and a pump 70 as the gas-liquid mixing unit. The liquid circulation flow path 60 includes a liquid suction end portion 61 and a liquid discharge end portion 62, the liquid suction end portion 61 is connected to the cathode chamber 12B, the liquid discharge end portion 62 is inserted into the reaction chamber 11, and the pump 70 can suck the carbon dioxide fixing agent from the liquid suction end portion 61 and can discharge the sucked carbon dioxide fixing agent from the liquid discharge end portion 62.

The liquid circulation flow path 60 is not particularly limited, and may be, for example, a pipe, a hose, or the like.

In the present variation, the liquid circulation flow path 60 further includes an aspirator 63 as a gas-liquid mixing member, and the aspirator 63 can mix a gas containing carbon dioxide into a liquid flowing through the liquid circulation flow path 60. In the present variation, the aspirator 63 also serves as the liquid discharge end portion 62. The aspirator 63 may use a jet of liquid to entrain the gas into the liquid. The aspirator 63 may be, for example, one to which a hose for taking in the gas is attached. Specific examples of the aspirator 63 include a metal aspirator (water jet pump) (product number: 1-689-02, manufactured by AS ONE Corporation.) and a metal aspirator (water jet pump) (product number: 1-689-04, manufactured by AS ONE Corporation.). The gas-liquid mixing member is not particularly limited, and may be, for example, a mixer or the like. In FIG. 2, a gas containing carbon dioxide can be taken in from the outside by a hose connected to the aspirator 63. Then, the gas can be mixed into the sucked carbon dioxide fixing agent by the aspirator 63.

In the present variation, the liquid circulation flow path 60 includes a flow rate adjustment unit 64. The flow rate adjustment unit 64 is not particularly limited, and examples thereof include a cock and a valve.

In the present variation, the liquid suction end portion 61 is provided on the cathode chamber 12B side. The present invention, however, is not limited thereto, and for example, the liquid suction end portion 61 may be provided on the anode chamber 12A side.

The liquid suction end portion 61 may include, for example, a filtration unit. The filtration unit can remove a solid component contained in the carbon dioxide fixing agent. The filtration unit is not particularly limited as long as it can remove a solid component contained in the carbon dioxide fixing agent. As for the filtration unit, for example, a commercially available strainer or the like can be appropriately used in accordance with the diameter of the pipe of the liquid circulation flow path 60 or the like. As a result, for example, a relatively large floater, a solidified precipitate, or the like can be prevented from flowing into the liquid circulation flow path 60, and failure of the pump 70 (e.g., breakage of the impeller) can be prevented.

As described above, in the present variation, the aspirator 63 also serves as the liquid discharge end portion 62. The present invention, however, is not limited thereto, and the aspirator 63 may be provided in the middle of the liquid circulation flow path 60. In this case, the liquid discharge end portion 62 may be formed of, for example, plastic, ceramic, metal, glass, or a porous material. Alternatively, the liquid discharge end portion 62 may be the end portion of the liquid circulation flow path 60.

The liquid discharge end portion 62 may discharge the carbon dioxide fixing agent in a state of shower or mist from the upper part of the reaction chamber 11 into the reaction chamber 11, for example. As the configuration for discharging in a state of shower or mist, a general spray or the like can be used.

In the present variation, the liquid discharge end portion 62 is provided at the upper part of the reaction chamber 11. The "upper part" is higher than the liquid level, and may be, for example, a position of the upper half of the space in the first reaction vessel 10. The present invention, however, is not limited thereto, and the liquid discharge end portion 62 may be provided at the lower part of the reaction chamber 11, and the sucked liquid may be discharged into the carbon dioxide fixing agent contained in the reaction chamber 11, for example.

The liquid discharge end portion 62 may be provided with a plurality of holes, and may be capable of discharging the carbon dioxide fixing agent from the plurality of holes into the carbon dioxide fixing agent in the reaction chamber 11, for example. The number, size, and shape of the plurality of holes are not particularly limited, and may be appropriately set depending on the desired reaction rate, the pressure of the liquid to be discharged, and the like.

Further, the liquid discharge end portion 62 may be capable of horizontally injecting the gas into the carbon dioxide fixing agent contained in the reaction chamber 11, for example. Thus, for example, it is possible to make the contact time between the injected carbon dioxide fixing agent and the carbon dioxide fixing agent in the reaction chamber 11 longer.

The pump 70 can, for example, apply pressure to the liquid flowing through the liquid circulation flow path 60. The pump 70 is not particularly limited, and a general pump can be used.

In the present variation, the liquid circulation flow path 60 may not include the aspirator 63. In this case, for example, the sucked carbon dioxide fixing agent is jetted vigorously from the liquid discharge end portion 62 to the liquid surface of the carbon dioxide fixing agent contained in the reaction chamber 11, so that the gas existing in the first reaction vessel 10 is entrained in the jetted carbon dioxide fixing agent, thereby mixing the carbon dioxide fixing agent and the gas.

The configuration for jetting the sucked carbon dioxide fixing agent vigorously can be appropriately set instead of or in addition to the configuration of the liquid discharge end portion 62, for example, by increasing the pressure applied by the pump 70, decreasing the size of the jetting port of the liquid discharge end portion 62, or the like.

In addition, in this case, the carbon dioxide fixation apparatus 1 may include a gas intake unit for taking the gas into the first reaction vessel 10. The gas intake unit may be an opening provided in the first reaction vessel 10, or may be a pipe, a hose, or the like. The gas intake unit can take the gas into the reaction chamber 11, for example.

### Variation 2

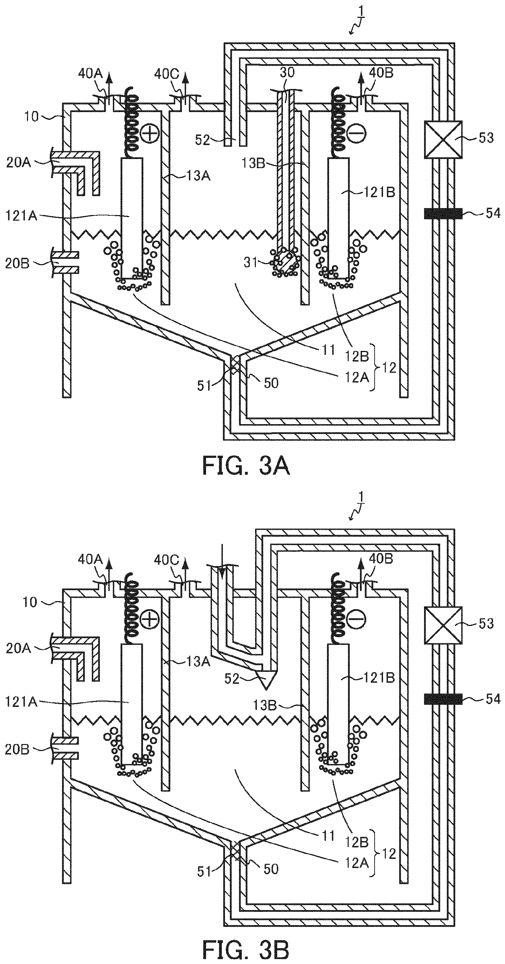

As shown in FIG. 3A, in the carbon dioxide fixation apparatus 1 of the present variation, the liquid extraction portion 50 further includes a liquid discharge portion 52, a pump 53, and a flow rate adjustment unit 54. The liquid discharge portion 52 is inserted into the reaction chamber 11, the carbon dioxide fixing agent is sucked from the liquid extraction portion 50 by the pump 53, and the sucked carbon dioxide fixing agent can be discharged from the liquid discharge portion 52.

The liquid discharge portion 52 is not particularly limited as long as it can discharge the sucked carbon dioxide fixing agent. Regarding the liquid discharge portion 52, for example, reference can be made to the description as to the liquid discharge end portion 62 in Variation 1.

Regarding the pump 53 and the flow rate adjustment unit 54, for example, reference can be made to the description as to the pump 70 and the flow rate adjustment unit 64 in Variation 1, respectively.

In the carbon dioxide fixation apparatus 1 of the present variation, as shown in FIG. 3B, the liquid extraction portion 50 may also serve as the gas-liquid mixing unit. In FIG. 3B, the carbon dioxide fixation apparatus 1 includes the liquid extraction portion 50 instead of the liquid circulation flow path 60 as the gas-liquid mixing unit in Variation 1, and includes the liquid discharge portion 52 instead of the liquid discharge end portion 62 in Variation 1.

According to the carbon dioxide fixation apparatus 1 of the present variation, first, the carbon dioxide fixing agent, the reaction product, and the like after the reaction contained in the reaction vessel 10 are taken out by the liquid extraction portion 50. Next, the reaction product and the like in the carbon dioxide fixing agent are separated by the filter 51. Next, the carbon dioxide fixing agent from which the reaction product and the like are separated is again discharged into the vessel 10 by the liquid discharge portion 52. Thus, the carbon dioxide fixing agent from which the reaction product and the like are separated can be reused.

### Third Embodiment

### (Carbon dioxide fixation apparatus)

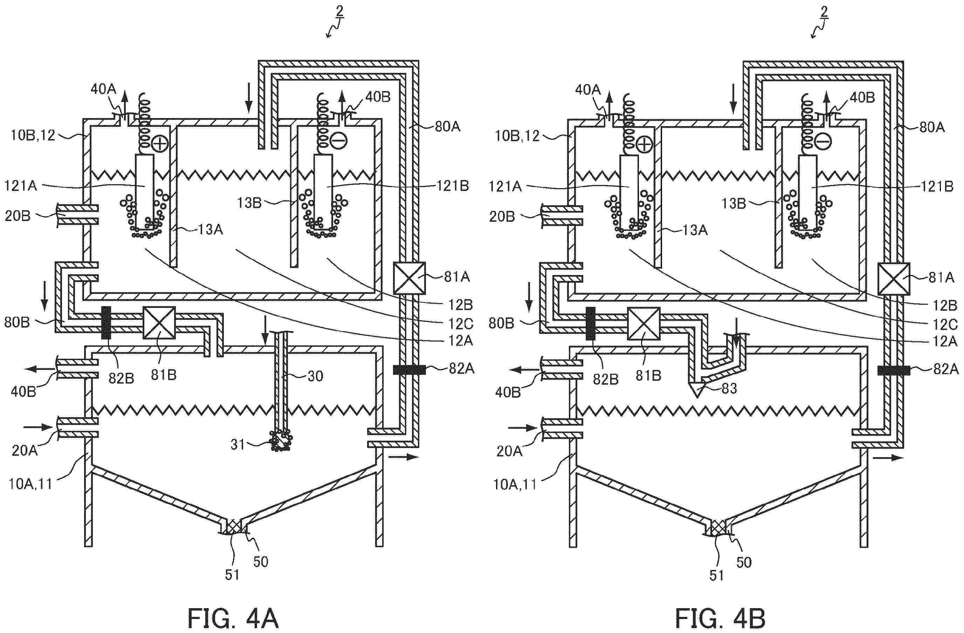

FIGs. 4A and 4B are schematic cross-sectional views showing an example of a carbon dioxide fixation apparatus 2 of the present embodiment as viewed from the lateral direction. In FIGs. 4A and 4B, the inside of the carbon dioxide fixation apparatus 2 is shown in a perspective manner. As shown in FIG.4A, the carbon dioxide fixation apparatus 2 includes a first reaction vessel 10A and a second reaction vessel 10B, the first reaction vessel 10A is a reaction chamber 11, and the second reaction vessel 10B is an electrolysis chamber 12. Further, liquid can be fed from the first reaction vessel 10A to the second reaction vessel 10B through a vessel communication flow path 80A, and can be fed from the second reaction vessel 10B to the first reaction vessel 10A through a vessel communication flow path 80B. Except for these points, the present embodiment is the same as the embodiment described above.

As shown in FIG. 4A, the electrolysis chamber 12 includes an anode chamber 12A, an intermediate chamber 12C, and a cathode chamber 12B. In the present embodiment, the anode chamber 12A and the cathode chamber 12B are separated by a partition wall 13A and a partition wall 13B, and the intermediate chamber 12C is formed between the partition wall 13A and the partition wall 13B. Further, the anode chamber 12A, the intermediate chamber 12C, and the cathode chamber 12B are connected to one another at a non-installation portion where the partition wall 13A and the partition wall 13B are not installed.

Since the carbon dioxide fixation apparatus 2 of the present embodiment has the above described configuration, the carbon dioxide fixing agent and carbon dioxide can be reacted in the reaction chamber 11, the carbon dioxide fixing agent after the reaction can be fed from the reaction chamber 11 to the electrolysis chamber 12 through the vessel communication flow path 80A, the carbon dioxide fixing agent after the reaction can be electrolyzed in the electrolysis chamber 12, the carbon dioxide fixing agent after the electrolysis can be fed from the electrolysis chamber 12 to the reaction chamber 11 through the vessel communication flow path 80B, and the carbon dioxide fixing agent after the electrolysis can be reused as the carbon dioxide fixing agent in the reaction chamber 11.

In the second reaction vessel 10B, the anode chamber 12A, the intermediate chamber 12C, and the cathode chamber 12B are not particularly limited, and reference can be made to the description as to the anode chamber 12A and the cathode chamber 12B. The intermediate chamber 12C is the same as the anode chamber 12A and the cathode chamber 12B except that the electrode is not provided.

The vessel communication flow path 80Ais not particularly limited, and may be a pipe, a hose, or the like. As shown in FIG. 4A, the vessel communication flow path 80A may include a pump 81A and a flow rate adjustment unit 82A. The pump 81A and the flow rate adjustment unit 82A are the same as the pump 70 and the flow rate adjustment unit 64.

In the carbon dioxide fixation apparatus 2 of the present embodiment, the first reaction vessel 10A includes a liquid extraction portion 50 as shown in FIG. 4A. The liquid extraction portion 50 includes a filter 51.

As described in Variation 2 of the second embodiment, for example, the liquid extraction portion 50 may further include a liquid discharge portion 52, a pump 53, and a flow rate adjustment unit 54, and the liquid discharge portion 52 may be connected to the second reaction vessel 10B. Thus, the carbon dioxide fixing agent from which the reaction product and the like are separated can be discharged into the second reaction vessel 10B and reused.

In this case, the liquid extraction portion 50 may also serve as the vessel communication flow path 80A. That is, in FIG.4A, the carbon dioxide fixation apparatus 2 may include the liquid extraction portion 50 instead of the vessel communication flow path 80A.

As shown in FIG. 4A, the vessel communication flow path 80B may include a pump 81B and a flow rate adjustment unit 82B. The pump 81B and the flow rate adjustment unit 82B are the same as the pump 70 and the flow rate adjustment unit 64.

Next, FIG.4B shows another form of the carbon dioxide fixation apparatus 2 of the present embodiment. In this form, in the carbon dioxide fixation apparatus 2, the vessel communication flow path 80B also serves as the gas-liquid mixing unit. The vessel communication flow path 80B includes an aspirator 83. Except for this point, the configuration is the same as that of FIG. 4A.

In this form, regarding the vessel communication flow path 80B, reference can be made to the description as to the liquid circulation flow path 60.

The vessel communication flow path 80B includes the aspirator 83 as the gas-liquid mixing member, and the aspirator 83 can mix a gas containing carbon dioxide into the liquid flowing through the vessel communication flow path 80B. The aspirator 83 is the same as the aspirator 63.

In the present embodiment, the aspirator 83 also serves as a liquid discharge end portion of the vessel communication flow path 80B. The present invention, however, is not limited thereto, and the aspirator 83 may be provided in the middle of the vessel communication flow path 80B. In this case, the liquid discharge end portion may be formed of, for example, plastic, ceramic, metal, glass, or a porous material. Alternatively, the liquid discharge end portion may be the end portion of the vessel communication flow path 80B.

The liquid discharge end portion of the vessel communication flow path 80B may discharge the carbon dioxide fixing agent in a state of shower or mist into the reaction chamber 11 from the upper part thereof, for example. As the configuration for discharging the carbon dioxide fixing agent in a state of shower or mist, a general spray or the like can be used.

As an effect by discharging the carbon dioxide fixing agent in a state of shower or mist, the following points can be mentioned. As described above, in contact between the gas and the carbon dioxide fixing agent, by the reaction between calcium chloride and high concentration sodium hydroxide, precipitation of calcium hydroxide occurs, and thus there is a possibility that the amount of calcium carbonate synthesized by the contact decreases. On the other hand, by discharging the carbon dioxide fixing agent in a state of shower or mist, first, sodium hydroxide contained in the carbon dioxide fixing agent discharged from the liquid discharge end portion is brought into contact with the gas in the reaction chamber 11 to react (the first contact step), and then, the product (sodium hydrogen carbonate and sodium carbonate) obtained by the reaction reacts with the calcium chloride contained in the carbon dioxide fixing agent in the reaction chamber 11. Therefore, it is possible to prevent calcium hydroxide from being produced by the reaction between calcium chloride and high concentration sodium hydroxide, and to fix more carbon dioxide.

The carbon dioxide fixation apparatus 2 of the present embodiment is a two-tank type fixation apparatus using the first reaction vessel 10A and the second reaction vessel 10B corresponding to the reaction chamber 11 and the electrolysis chamber 12, respectively. Therefore, even when high concentration sodium hydroxide is produced in the electrolysis chamber 12, contact between high concentration sodium hydroxide and calcium chloride in the reaction chamber 11 can be prevented by adjusting the flow rate to the reaction chamber 11, or adjusting the discharge form as described above. Therefore, it is possible to prevent calcium hydroxide from being produced by the reaction between calcium chloride and high concentration sodium hydroxide. From the above, it is considered that the carbon dioxide fixation apparatus 2 of the present embodiment is suitable when high concentration carbon dioxide is discharged, such as a power plant or the like.

### Fourth Embodiment

### (Carbon dioxide fixation apparatus)

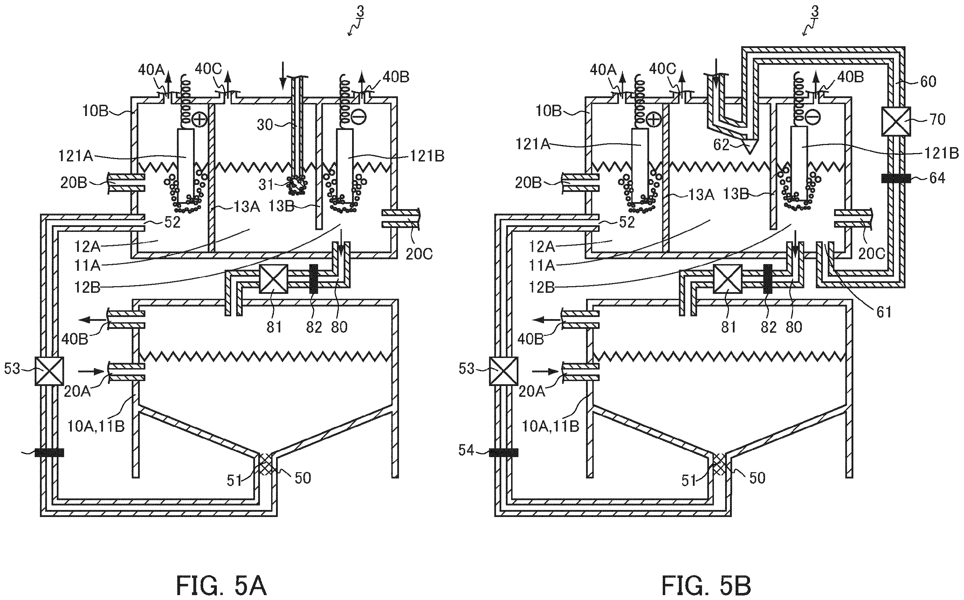

FIGs. 5A and 5B are schematic cross-sectional views showing an example of a carbon dioxide fixation apparatus 3 of the present embodiment as viewed from the lateral direction. In FIGs. 5A and 5B, the inside of the carbon dioxide fixation apparatus 3 is shown in a perspective manner. As shown in FIG. 5A, the carbon dioxide fixation apparatus 3 includes a first reaction vessel 10A and a second reaction vessel 10B, the first reaction vessel 10A is a second reaction chamber 11B, and the second reaction vessel 10B includes an electrolysis chamber 12 (an anode chamber 12A and a cathode chamber 12B) and a first reaction chamber 11A. In the second reaction vessel 10B, the anode chamber 12A and the first reaction chamber 11A are divided by the partition wall 13A which is a cation exchange membrane without providing the non-installation portion. Further, liquid can be fed from the second reaction vessel 10B to the first reaction vessel 10A through a vessel communication flow path 80. The first reaction vessel 10A is provided with a liquid extraction portion 50. A liquid discharge portion 52 of the liquid extraction portion 50 is inserted into the anode chamber 12A, and a pump 53 can suck the carbon dioxide fixing agent from the liquid extraction portion 50, and can discharge the sucked carbon dioxide fixing agent from the liquid discharge portion 52. Further, the cathode chamber 12B includes a carbon dioxide fixing agent feeding unit 20C. Except for these points, the present embodiment is the same as the embodiments described above.

A partition wall 13A which is a cation exchange membrane is not particularly limited, and specific examples thereof include Nafion® N324 and the like. Asbestos can also be used after taking the effects on the human body into consideration.

The carbon dioxide fixing agent feeding unit 20C is the same as the carbon dioxide fixing agent feeding units 20A and 20B. For example, the carbon dioxide fixing agent feeding unit 20C can feed distilled water. This makes it possible to replenish the water necessary for the electrolysis, for example. Further, the concentration of sodium hydroxide produced in the second reaction vessel 10B by electrolysis can be adjusted.

In the present embodiment, the vessel communication flow path 80 can feed liquid from the cathode chamber 12B of the second reaction vessel 10B to the first reaction vessel 10A. Thus, for example, contamination of chlorine can be prevented.

Since the carbon dioxide fixation apparatus 3 of the present embodiment has the above described configuration, the carbon dioxide fixing agent can be reacted with the carbon dioxide in the first reaction chamber 11A and the second reaction chamber 11B, the carbon dioxide fixing agent after the reaction can be fed from the second reaction chamber 11B to the electrolysis chamber 12 by the liquid extraction portion 50, the carbon dioxide fixing agent after the reaction can be electrolyzed in the electrolysis chamber 12, the carbon dioxide fixing agent after the electrolysis can be fed from the electrolysis chamber 12 to the first reaction chamber 11A, and the carbon dioxide fixing agent after the electrolysis can be reused as the carbon dioxide fixing agent in the first reaction chamber 11A and the second reaction chamber 11B.

Further, since the carbon dioxide fixation apparatus 3 of the present embodiment has the above configuration, a solution containing sodium hydroxide can be brought into contact with a gas containing carbon dioxide in the first reaction chamber 11A (the first contact step), and after the first contact step, calcium chloride can be added to the solution in the second reaction chamber 11B (the second contact step). The first contact step and the second contact step are the same as described above.

According to the carbon dioxide fixation apparatus 3 of the present embodiment, for example, calcium carbonate (CaCO₃), which is the reaction product, is not produced by the first contact step in the first reaction chamber 11A. Therefore, it is possible to prevent the above problem that the reaction product produced by the contact step is adhered to the reaction vessel (the second reaction vessel 10B), the gas-liquid mixing unit (the gas feeding unit 30), and the like.

Further, according to the carbon dioxide fixation apparatus 3 of the present embodiment, as described above, the anode chamber 12A and the first reaction chamber 11A are divided by the partition wall 13A which is a cation exchange membrane without providing the non-installation portion. Therefore, it is possible to prevent chloride ions (Cl⁻) generated on the anode chamber 12A side from migrating to the first reaction chamber 11A side. Thus, for example, it is possible to prevent the problem that the chloride ion reacts with the sodium hydroxide (NaOH) produced by the electrolysis to produce NaCIO, which decreases the sodium hydroxide concentration in the first reaction chamber 11A. Further, for example, it is possible to prevent the chlorine (Cl₂) produced on the anode chamber 12A side from mixing with the gas containing carbon dioxide in the first reaction chamber 11A.

Next, FIG.5B shows another form of the carbon dioxide fixation apparatus 3 of the present embodiment. As shown in FIG. 5B, the carbon dioxide fixation apparatus 3 includes a liquid circulation flow path 60 and a pump 70 as the gas-liquid mixing unit. The liquid circulation flow path 60 includes a liquid suction end portion 61, a liquid discharge end portion 62 which is an aspirator, and a flow rate adjustment unit 64, the liquid suction end portion 61 is connected to the cathode chamber 12B, the liquid discharge end portion 62 is inserted into the first reaction chamber 11A, and the pump 70 can suck the carbon dioxide fixing agent from the liquid suction end portion 61 and discharge the sucked carbon dioxide fixing agent from the liquid discharge end portion 62. Except for these points, the configuration is the same as that of FIG. 5A.

Next, a case in which the method for fixing the carbon dioxide is performed using the carbon dioxide fixation apparatus 3 of the present embodiment will be described.

First, prior to the step S101, a solution containing sodium chloride is fed from the carbon dioxide fixing agent feeding unit 20B of the second reaction vessel 10B as the carbon dioxide fixing agent, and water is fed from the carbon dioxide fixing agent feeding unit 20C (START). Then, the solution is electrolyzed by the anode 121A and the cathode 121B connected to a power supply device to produce a sodium hydroxide solution (S100).

Next, a gas containing carbon dioxide is fed from the gas feeding unit 30 into the carbon dioxide fixing agent in the first reaction chamber 11A of the second reaction vessel 10B (S101; the first contact step).

Next, the carbon dioxide fixing agent after the reaction by the first contact step is fed from the second reaction vessel 10B to the first reaction vessel 10A by the vessel communication flow path 80 (S102). The carbon dioxide fixing agent after the reaction by the first contact step is, for example, a solution comprising sodium hydrogen carbonate and sodium carbonate.

Next, calcium chloride is added from the carbon dioxide fixing agent feeding unit 20A of the first reaction vessel 10A as the second fixing agent in the carbon dioxide fixing agent (S103; the second contact step).

Next, the carbon dioxide fixing agent after the reaction by the second contact step is sucked from the liquid extraction portion 50 by the pump 53, and the sucked carbon dioxide fixing agent is discharged from the liquid discharge portion 52 inserted into the anode chamber 12A (S104). The carbon dioxide fixing agent after the reaction by the second contact step is, for example, a solution containing sodium chloride.

It is to be noted that, in the step (S104), the solid reaction product can be separated from the carbon dioxide fixing agent by the filter 51. The solid reaction product is, for example, calcium carbonate.

Next, the solution containing the sodium chloride discharged from the liquid discharge portion 52 is subjected to electrolysis in the same manner as in the step S100, thereby producing a sodium hydroxide solution (S105).

Then, after the step (S105), the steps after the step (S101) can be repeatedly performed. Each of the steps may be performed in the order described above or may be performed in parallel.

As described above, carbon dioxide can be fixed by reacting sodium hydroxide and calcium chloride with carbon dioxide to produce calcium carbonate. Further, by performing electrolysis of sodium chloride produced by the reaction, the reaction according to each of the above steps can be repeatedly performed.

### Examples

Hereinafter, the present invention will be described with reference to examples. It is to be noted, however, that the present invention is not restricted by the following examples. Commercially available reagents were used based on their protocols unless otherwise mentioned.

### Example 1

It was examined that calcium carbonate (CaCO₃) was formed by adding calcium chloride (CaCl₂) to a sodium chloride (NaCl) solution that has been electrolyzed.

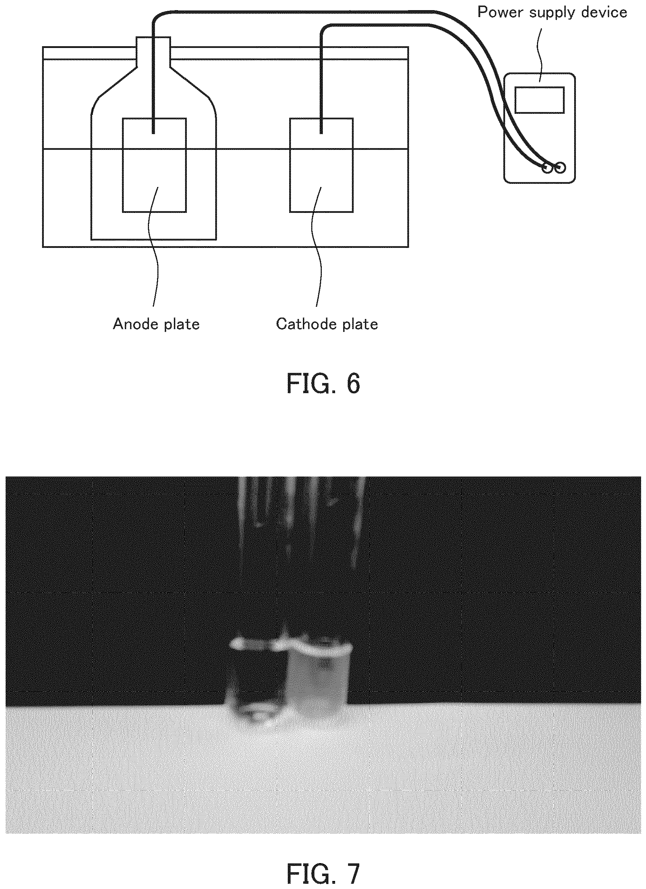

An electrolysis apparatus was produced as follows. As shown in FIG. 6, a plastic Tupperware (commercially available one, size: 12 × 9 × 5 cm) having a volume of 500 ml was used as a vessel. An air hole (about 7 mm in diameter), a conductor hole (about 7 mm in diameter) to a cathode plate, and an introduction hole (about 1.7 cm in diameter) to an anode plate were formed on the lid of the vessel. As the anode plate and the cathode plate, platinum-coated titanium network electrodes having a size of 5 × 5 cm (manufactured by TANAKA Kikinzoku Kogyo K.K.) were used. A 2 l-PET bottle (commercially available one) was cut to prepare a member including a mouth of the PET bottle. The conductor of the anode plate was passed through the mouth of the member. The anode plate was connected to the conductor so that the anode plate was in a state of being surrounded by the member. In addition, the mouth of the member was fitted into the introduction hole to the anode plate in the vessel so that chlorine (Cl₂) produced from the anode plate could be discharged to the outside of the vessel. Thus, chlorine was prevented from being mixed into the gas in the vessel. Each of the conductor of the anode plate and the conductor of the cathode plate was connected to a power supply device (rectifier YG-1502D+ (manufactured by YAOGONG).

Sodium chloride (manufactured by Wako Pure Chemical Industries, Ltd.) was diluted with distilled water to prepare a 10% sodium chloride solution. Further, calcium chloride (manufactured by Wako Pure Chemical Industries, Ltd.) was dissolved in distilled water to prepare a 0.1 mol/l calcium chloride solution.

200 ml of 10% sodium chloride solution was fed into the vessel of the electrolysis apparatus and energized using the power supply device at about 8 V and 1.5 A for about 1 hour. In the energization, an alternating current of 100 V was converted into a direct current to use. The pH of the solution was measured before and after the energization.

As a result, the pH of the solution before the energization was 7.5 and after the energization was 11.0. This showed that, by the energization, sodium chloride was electrolyzed to produce sodium hydroxide (NaOH).

Further, after the energization, the solution in the vicinity of the cathode plate in the vessel was collected. 1 ml of the collected solution and 1 ml of 0.1 mol/l calcium chloride solution were fed into a 10 ml-test tube and mixed. Further, as a control, 1 ml of 10% sodium chloride solution and 1 ml of 0.1 mol/l calcium chloride solution were mixed in the same manner without performing energization. Whether or not a precipitate was formed in the mixed liquid after the mixing was visually checked.

The results are shown in FIG. 7. FIG. 7 is a photograph of the mixed liquid, the left tube contains the control, and the right tube contains the mixed liquid after the energization. As shown in FIG. 7, as a result of performing the energization, in the mixed liquid, a white precipitate was formed. On the other hand, when the energization was not performed, no precipitate was formed in the mixed liquid. The formed white precipitate is considered to be calcium carbonate produced by the reaction between calcium chloride and sodium carbonate (Na₂CO), which was produced by reaction (absorption) between the sodium hydroxide produced by the electrolysis and carbon dioxide (CO₂) in the air.

As described above, it was verified that calcium carbonate was formed by adding calcium chloride after electrolysis of the sodium chloride solution.

### Example 2

It was examined that calcium carbonate was formed by adding calcium chloride to the sodium chloride solution that has been electrolyzed under a different condition.

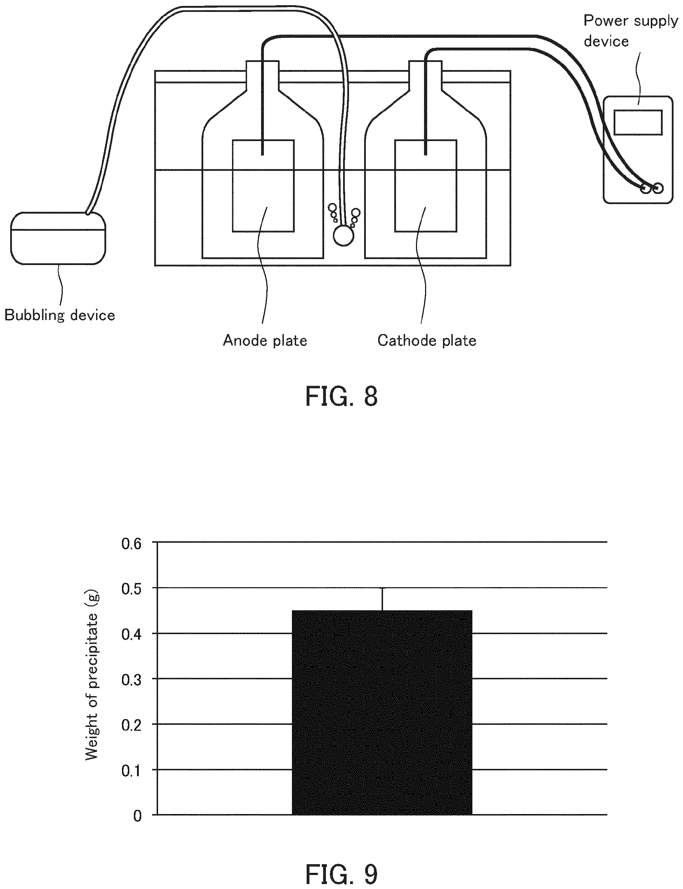

An electrolysis apparatus was produced as follows. As shown in FIG. 8, a 1.85 l-plastic box (commercially available one) was used as a vessel. An air hole (about several mm in diameter), a conductor hole (about 2 cm in diameter) to the cathode plate, and an introduction hole (about 2 cm in diameter) to the anode plate were formed on the lid of the vessel. The anode plate and the cathode plate were the same as in Example 1. Further, in the same manner as in Example 1, two pieces of the members were produced, the anode plate and the cathode plate were respectively attached to the members, and the members were respectively installed in the introduction holes of the vessel. The anode plate and the cathode plate were connected to a power supply device (DC power supply device, STP3010H, manufactured by SKYTOPPOWER). Furthermore, as shown in FIG. 8, a small hole for inserting a hose of a bubbling device is provided on the vessel to install the bubbling device for aquarium organism (product name: Bukubuku (one assembled from an air pump, a hose, and an air stone included in the set), manufactured by Kotobuki Kogei Co., Ltd.) so that bubbling can be performed.

A 10% sodium chloride solution and a 0.1 mol/l calcium chloride solution were prepared in the same manner as in Example 1.

Electrolysis was performed by feeding 700 ml of the 10% sodium chloride solution into the vessel of the electrolysis apparatus and energizing with the power supply device for 22 hours. The electrolysis condition was 9.65 V and 0.9 A at the start of energization and 9.80 V and 1.5 A at 22 hours after energization. After the energization, the solution was collected as an electrolysis solution. 0.75 ml of distilled water was added to 0.25 ml of the electrolysis solution to dilute, and 1 ml of the 0.1 mol/l calcium chloride solution was further added thereto to prepare a mixed liquid. By bubbling carbon dioxide (CO₂ 100%, manufactured by KOIKE SANSO KOGYO CO., LTD.), the carbon dioxide was brought into contact with the mixed liquid. The bubbling was performed by ejecting carbon dioxide from the tip of a Pasteur pipette. The bubbling condition was 40 ml for 10 seconds. After the contact, the mixed liquid was centrifuged at 3000 rpm for 10 minutes to separate the precipitate. Thereafter, the supernatant of the test tube was removed with an aspirator. Then, before and after the contact, the weight of the test tube was measured, and the difference in the weight before and after the contact was calculated as the precipitation amount. It is to be noted that, when the test tube before and after the contact was visually checked, the mixed liquid before the contact was colorless and transparent, and the mixed liquid after the contact was white turbid.

The results are shown in FIG. 9. FIG. 9 is a graph showing the weight of the precipitate produced in the mixed liquid due to contact with the carbon dioxide. In FIG. 9, the vertical axis indicates the weight (g) of the precipitate per test tube. It is to be noted that the value of the weight of the precipitate was an average value of measured values of a total of 6 samples. As shown in FIG. 9, as a result of bringing carbon dioxide into contact with the mixed liquid after the electrolysis, the precipitate was produced.

Next, as a reference experiment, the following experiment was carried out. The pipe described in Reference Example 8 to be described below was used as the vessel. 200 ml of the electrolysis liquid (the sodium chloride solution after the energization) was fed into the pipe and, by bubbling air, the air was brought into contact with the electrolysis liquid in the same manner as described above using the bubbling device. After the contact, the carbon dioxide concentration of the gas in the upper space (about 14 cm in height) of the pipe was measured using a carbon dioxide monitor (RI-85, manufactured by RIKEN KEIKI Co., Ltd.). Further, the carbon dioxide concentration of the air was measured in the same manner.

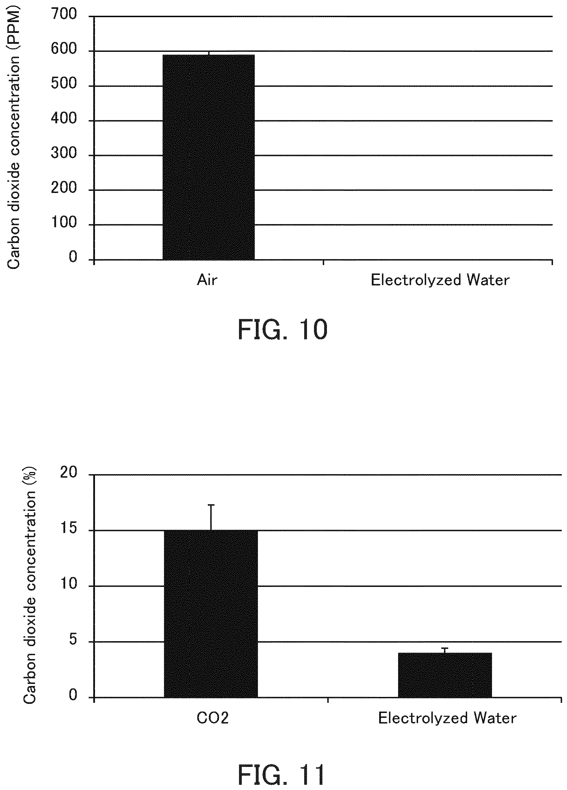

The results are shown in FIG. 10. FIG. 10 is a graph showing the carbon dioxide concentration in the pipe after the contact. In FIG. 10, the vertical axis indicates the carbon dioxide concentration (PPM), and the horizontal axis indicates, from the left, the air (Air) and the gas in the upper space of the pipe after the contact (Electrolyzed Water). It is to be noted that the value of the carbon dioxide concentration was an average value of measured values of a total of 3 samples. As shown in FIG. 10, the carbon dioxide concentration in the pipe was greatly decreased due to the contact and the concentration became zero.

Next, an experiment was carried out in the same manner as described above except that a mixed air having a carbon dioxide concentration of 12 to 18% obtained by mixing the carbon dioxide into the air was used instead of the air.

The results are shown in FIG. 11. FIG. 11 is a graph showing the carbon dioxide concentration in the pipe after the contact. In FIG. 11, the vertical axis indicates the carbon dioxide concentration (%) and the horizontal axis indicates, from the left, the mixed air (CO₂) and the gas in the upper space of the pipe after the contact (Electrolyzed Water). It is to be noted that each value of the carbon dioxide concentration was an average value of measured values of a total of 5 samples. As shown in FIG. 11, the average value of the carbon dioxide concentration of the mixed air was 15%, whereas the average value of the carbon dioxide concentration in the pipe was decreased to 4% by the contact.

Furthermore, the following experiment was conducted under a different condition. Electrolysis was performed by feeding 1 l of the 10% sodium chloride solution into the vessel of the electrolysis apparatus and energizing with the power supply device for 20 hours. The electrolysis condition was 9.64 V and 0.92 A at the start of energization and 9.62 V and 1.2 A at 20 hours after energization. Thereafter, by bubbling air using the bubbling device, the air was brought into contact with the electrolysis liquid in the vessel.

As a result, the carbon dioxide concentration of the air was 458 PPM, whereas the carbon dioxide concentration in the pipe was decreased to 80 PPM by the contact. As a reason why the carbon dioxide concentration after the contact did not become zero, it is considered that the concentration of sodium hydroxide was low, and that the height of the liquid level of the electrolysis liquid was low as compared to the case where the pipe was used, and the like.

As described above, it was verified that calcium carbonate was formed by adding calcium chloride after electrolysis of the sodium chloride solution under a different condition.

### Example 3

It was examined that, by coating the insertion end portion of the gas-liquid mixing unit with a water repellent, adhesion of the reaction product to the insertion end portion can be suppressed.

The coating treatment of the air stone was carried out by spraying a fluororesin waterproof spray (product name: LOCTITE, product number: DBS-422, manufactured by Henkel Japan Ltd.) on the air stone included in the set of the bubbling device described in Example 2 for several times and being allowed to stand for about 30 minutes. Thereafter, the bubbling device (hereinafter also referred to as "treated bubbling device") was assembled. As a control, the bubbling device (hereinafter also referred to as "control bubbling device") was assembled in the same manner using the untreated air stone.

An equal amount of the 0.1 N sodium hydroxide solution and the 0.1 mol/l calcium chloride solution were mixed to prepare a mixed liquid. The sodium hydroxide solution was prepared by diluting a 1 N sodium hydroxide solution (manufactured by Wako Pure Chemical Industries, Ltd.) with distilled water.

As a vessel, a 1.85 l-plastic box (commercially available one) was used. 11 of the mixed liquid was fed into the vessel and, by bubbling air for 24 hours using the treated bubbling device and the control bubbling device, the air was brought into contact with the mixed liquid.

After the contact, the air stone was operated in air for about 1 minute to remove moisture contained in the interior space of the air stone. Further, the air stone was taken out from the tube and allowed to stand at room temperature for 1 day or more to completely remove any moisture left in the interior space of the air stone. Thereafter, the adhesion amount of calcium carbonate which is a reaction product was calculated by measuring the weight of the air stone and subtracting the weight of the air stone before the contact from the weight of the air stone after the contact. It was verified separately that, among the reaction products, sodium chloride does not form a precipitate at the concentration in this experiment.

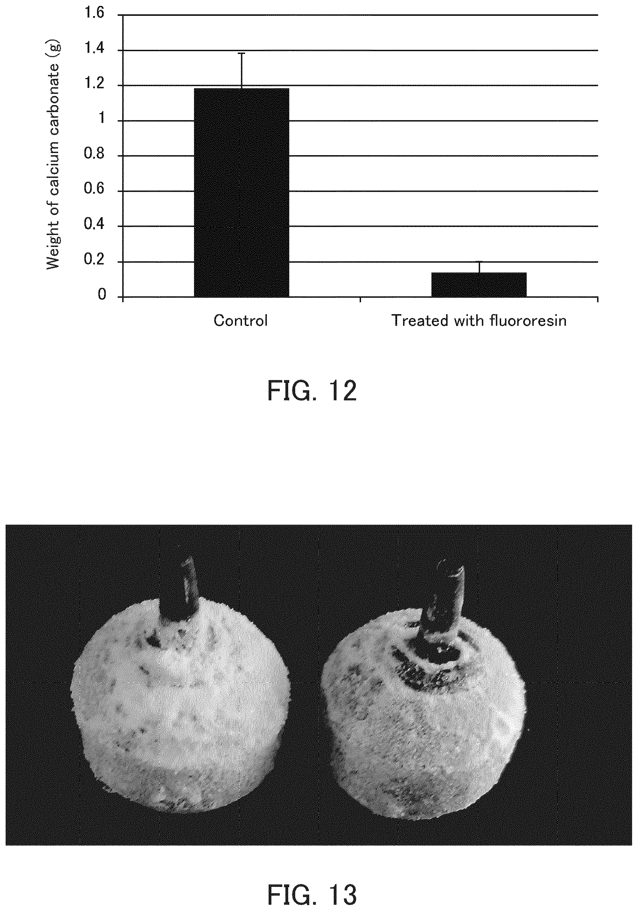

The results are shown in FIG. 12. FIG. 12 is a graph showing the weight of calcium carbonate adhered to the air stone. In FIG. 12, the vertical axis indicates the weight (g) of calcium carbonate per air stone, and the horizontal axis indicates, from the left, the control bubbling device (Control), and the treated bubbling device (treated with fluororesin). It is to be noted that each value of the weight of the calcium carbonate was an average value of measured values of a total of 4 samples. As shown in FIG. 12, the adhesion amount of the air stone subjected to the coating treatment was greatly decreased as compared to that of the control.

As described above, it was verified that by coating the insertion end portion of the gas-liquid mixing unit with a water repellent, adhesion of the reaction product to the insertion end portion can be suppressed.

### Example 4

It was examined that, by coating the insertion end portion of the gas-liquid mixing unit with a water repellent, adhesion of the reaction product to the insertion end portion can be suppressed even after contact for a longer time. Also, the reaction product in the mixed liquid was filtered off.

The coating treatment of the air stone was carried out in the same manner as in Example 3 except that an air stone (diameter: 3 cm, product name: Air ball M size, manufactured by Pet one Corporation) was used as the air stone. Thereafter, the bubbling device and the control bubbling device were assembled in the same manner as in Example 3.

A mixed liquid containing 0.05 N sodium hydroxide and 0.05 mol/l calcium chloride was prepared in the same manner as in Example 3.

In the same manner as in Example 3, 11 of the mixed liquid was fed into the vessel and, by bubbling air for 24 hours using the treated bubbling device and the control bubbling device, the air was brought into contact with the mixed liquid. Thereafter, the mixed liquid was replaced with a new liquid and, by bubbling air for another 24 hours, the air was brought into contact with the mixed liquid. After the contact, it was observed by the naked eye that calcium carbonate, which is a reaction product, was adhered to the wall surface and the bottom portion of the vessel, the inside of the dent of the surface and the interior space of the air stone, and the like. On the other hand, in the mixed liquid, no apparent white turbidity was observed.

After the contact, the air stone was activated in air for about 2 minutes to remove moisture contained in the interior space of the air stone. Further, the air stone was taken out from the tube and allowed to stand at room temperature for 1 to 12 days to completely remove any moisture left in the interior space of the air stone. Thereafter, the adhesion amount of calcium carbonate which is a reaction product was calculated by measuring the weight of the air stone and subtracting the weight of the air stone before the contact from the weight of the air stone after the contact.

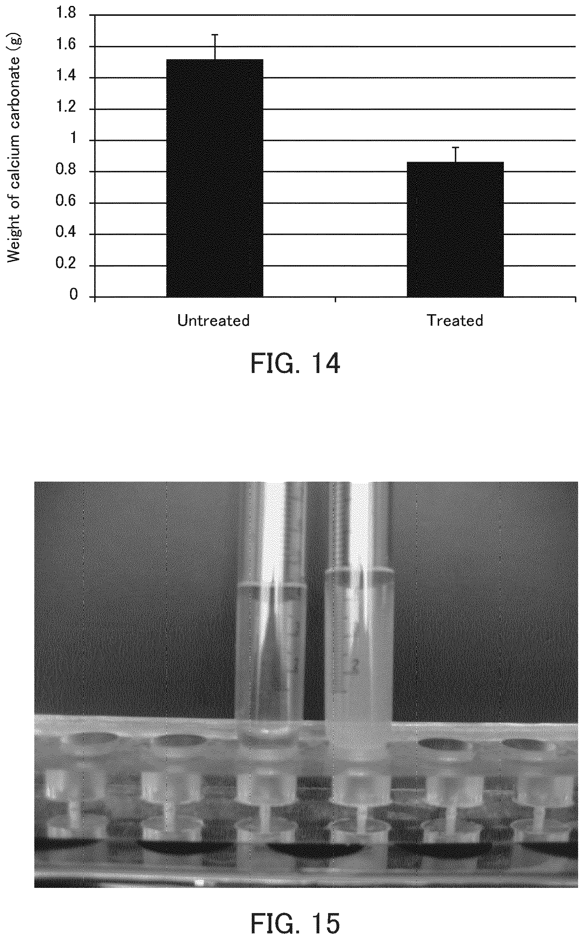

The results are shown in FIGs. 13 and 14. FIG. 13 is a photograph of the air stones after the contact. In FIG. 13, the left view shows the control air stone and the right view shows the treated air stone. As shown in FIG. 13, the adhesion amount of the air stone subjected to the coating treatment was decreased as compared to that of the control.

FIG. 14 is a graph showing the weight of calcium carbonate adhered to the air stone. In FIG. 14, the vertical axis indicates the weight (g) of calcium carbonate per air stone, and the horizontal axis indicates, from the left, control (untreated) air stone and the treated air stone. It is to be noted that each value of the weight of the calcium carbonate was an average value of measured values of a total of 3 samples. As shown in FIG. 14, the adhesion amount of the air stone subjected to the coating treatment was decreased as compared to that of the control.

Next, the reaction product in the mixed liquid after the contact was filtered off. As a filter, a non-bleached coffee filter (manufactured by Kanae Shiko Co., Ltd.) was used and installed in a funnel having a common shape.

The inside of the vessel containing the mixed liquid after the contact was scraped by an operator, so that the adhered reaction product was contained in the mixed liquid. The total amount (1 l) of the mixed liquid was then filtrated over several minutes.

As a result, a total amount of the mixed liquid could be passed through the filter without clogging. Then, it was observed by the naked eye that a residue of the reaction product was present on the filter.

As described above, it was verified that, by coating the insertion end portion of the gas-liquid mixing unit with a water repellent, adhesion of the reaction product to the insertion end portion can be suppressed even after contact for a longer time. Also, the reaction product in the mixed liquid could be filtered off.

### Reference Example 1

It was examined that carbon dioxide can be fixed by bringing a mixed liquid containing sodium hydroxide (NaOH) and calcium chloride (CaCl₂) into contact with a gas containing carbon dioxide (CO₂) by bubbling the gas into the mixed liquid in the vessel.

A 1 N sodium hydroxide solution (manufactured by Wako Pure Chemical Industries, Ltd.) was diluted with distilled water so as to have concentrations of 0.01, 0.02, 0.1, 0.2, and 0.4 N to prepare sodium hydroxide solutions having the respective concentrations. Further, a 1 mol/l calcium chloride solution (manufactured by Wako Pure Chemical Industries, Ltd.) was diluted with distilled water so as to have concentrations of 0.01, 0.02, 0.1, 0.2, and 1 (undiluted) mol/l to prepare calcium chloride solutions having the respective concentrations.

3 ml of each of the sodium hydroxide solutions of the respective concentrations and 3 ml of the 0.1mol/l calcium chloride solution were added to a 10 ml-test tube and mixed. Then, by bubbling carbon dioxide (CO₂ 100%, manufactured by KOIKE SANSO KOGYO CO., LTD.), the carbon dioxide was brought into contact with the mixed liquid. The bubbling was performed by ejecting carbon dioxide from the tip of a Pasteur pipette. The bubbling condition was 10 seconds (about 20 cm³). After the contact, the mixed liquid was centrifuged at 3000 rpm for 10 minutes. Then, before and after the contact, the weight of the test tube was measured, and the difference in the weight between before and after the contact was calculated as the precipitation amount. It is to be noted that, as will be described below, when the precipitate is produced before contact with the carbon dioxide, the contact was carried out after removing the precipitate.

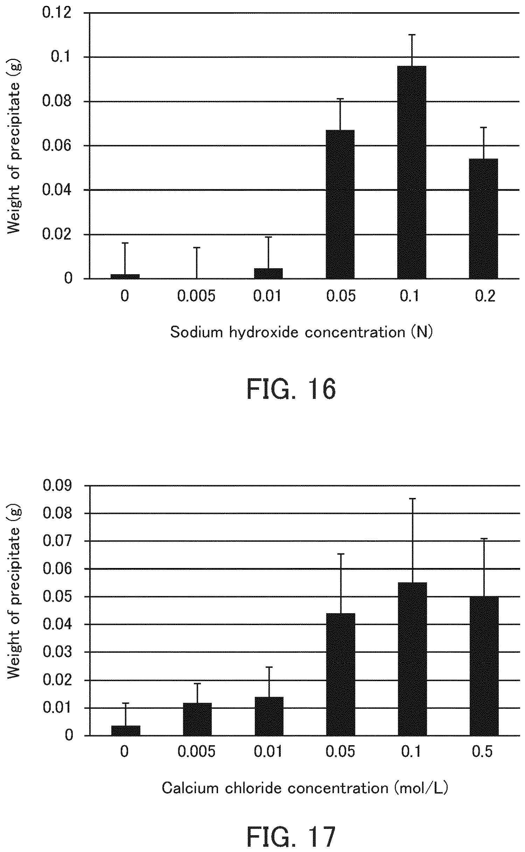

The results are shown in FIGs. 15 and 16. FIG. 15 is a photograph of mixed liquids containing 0.05 N sodium hydroxide and 0.05 mol/l calcium chloride before and after the contact with the carbon dioxide. In FIG. 15, the left test tube contains the mixed liquid before the contact and the right test tube contains the mixed liquid after the contact. As shown in FIG. 15, by bringing the mixed liquid into contact with the carbon dioxide, a white precipitate of calcium carbonate (CaCO₃) was produced in the mixed liquid. It is to be noted that, in the mixed liquid, a white turbidity was observed before the completion of bubbling for 10 seconds.

FIG. 16 is a graph showing the weight of the precipitate produced in the mixed liquid due to contact with the carbon dioxide. In FIG. 16, the vertical axis indicates the weight (g) of the precipitate per test tube, and the horizontal axis indicates the sodium hydroxide concentration (N) in the mixed liquid. It is to be noted that each value of the weight of the precipitate was an average value of measured values of a total of 5 samples of the mixed liquid. As shown in FIG. 16, as a result of bringing the mixed liquid into contact with the carbon dioxide, the precipitate was produced in the mixed liquid having the sodium hydroxide concentration of 0.01 N or more. The amount of the precipitate was greatly increased at the concentration of 0.05 N, and the amount of the precipitate was maximum at the concentration of 0. 1 N. On the other hand, the amount of the precipitate was decreased at the concentration of 0.2 N as compared to the value at the concentration of 0.1 N. It was verified that more carbon dioxide could be fixed at the concentrations of 0.05 N to 0.2 N, and at the concentrations 0.05 N to 0.1 N.

It is to be noted that, when the sodium hydroxide concentration was 0.2 N, a white precipitate was formed in the mixed liquid before the contact with carbon dioxide. This white precipitate is considered to be calcium hydroxide (Ca(OH)₂) produced by the reaction between calcium chloride and high concentration sodium hydroxide. Therefore, as a reason why the precipitation amount was decreased at the concentration of 0.2 N, it is considered that calcium hydroxide was produced by the reaction between calcium chloride and high concentration sodium hydroxide, so that the synthesis amount of calcium carbonate due to the contact was decreased.

Next, the contact was carried out in the same manner as described above except that 3 ml of the 0.1 N sodium hydroxide solution and 3 ml of each of the calcium chloride solutions having respective concentrations were added and mixed to prepare the mixed liquid.

The results are shown in FIG. 17. FIG. 17 is a graph showing the weight of the precipitate produced in the mixed liquid due to contact with the carbon dioxide. In FIG. 17, the vertical axis indicates the weight (g) of the precipitate per test tube, and the horizontal axis indicates the calcium chloride concentration (mol/l) in the mixed liquid. It is to be noted that each value of the weight of the precipitate was an average value of measured values of a total of 5 samples of the mixed liquid. As shown in FIG. 17, the precipitate was produced at all calcium chloride concentrations as a result of bringing the mixed liquid into contact with carbon dioxide. The amount of the precipitate was greatly increased at the concentration of 0.05 mol/l, and the amount of the precipitate was maximum at the concentration of 0.1 mol/l. It was verified that more carbon dioxide could be fixed when the calcium chloride concentration was 0.05 mol/l to 0.5 mol/l.

It is to be noted that, when the calcium chloride concentration was 0.2 mol/l to 0.5 mol/l, formation of a white precipitate was observed in the mixed liquid before the contact with carbon dioxide. Then, this white precipitate was disappeared by adding carbon dioxide during the contact. On the other hand, when the calcium chloride concentration was 0.1 mol/l and 0.05 mol/l, a precipitate was formed in the mixed liquid, and even if the contact was carried out, the precipitate was not disappeared.

As described above, it was verified that carbon dioxide can be fixed by bringing a mixed liquid containing sodium hydroxide and calcium chloride into contact with a gas containing carbon dioxide by bubbling the gas into the mixed liquid in the vessel.

### Reference Example 2

It was examined that the concentration of sodium hydroxide was related to whether or not the precipitate was formed by mixing a solution containing sodium hydroxide (NaOH) and a solution containing calcium chloride (CaCl₂).

3 ml of sodium hydroxide solution was fed into a 10 ml-test tube, and then 3 ml of calcium chloride solution was added to prepare a mixed liquid. In the mixed liquid, the sodium hydroxide concentrations were 0.2 N and 0.25 N, and the calcium chloride concentration was 0.05 mol/l. After the mixing, a photograph of the test tubes was taken.

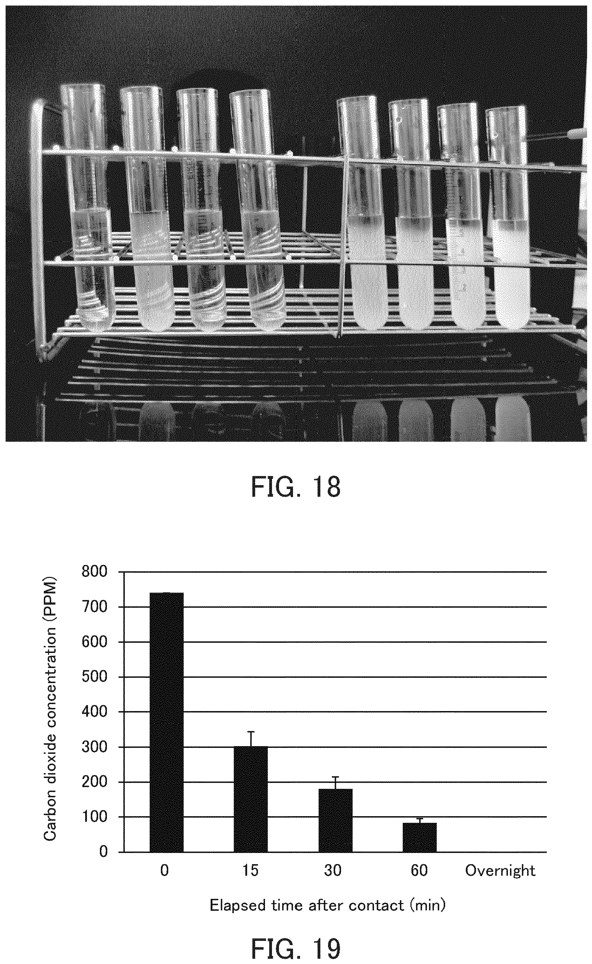

The results are shown in FIG. 18. FIG. 18 is a photograph of mixed liquids containing sodium hydroxide and calcium chloride. In FIG. 18, the four test tubes on the left show the cases when 0.2 N sodium hydroxide was used, and the four test tubes on the right show the cases when 0.25 N sodium hydroxide was used. As shown in FIG. 18, when 0.25 N sodium hydroxide was used, a white turbidity due to the formation of calcium hydroxide (Ca(OH)₂) was observed in all of the four mixed liquids subjected to the experiments. On the other hand, when 0. 2 N sodium hydroxide was used, a slight white turbidity was observed in the mixed liquid in 1 of the 4 test tubes subjected to the experiments, but no white turbidity was confirmed in mixed liquids in the remaining 3 test tubes.

As described above, it was verified that the concentration of sodium hydroxide was related to whether or not the precipitate was formed by mixing a solution containing sodium hydroxide (NaOH) and a solution containing calcium chloride (CaCl₂).

### Reference Example 3

It was examined that carbon dioxide can be fixed by bringing a mixed liquid containing sodium hydroxide and calcium chloride into contact with a gas containing carbon dioxide in a state where the mixed liquid is allowed to stand or shaken in a vessel.

An equal amount of the 0.1 N sodium hydroxide solution and the 0.1 mol/l calcium chloride solution were mixed to prepare a mixed liquid. A 2 l-PET bottle (commercially available one) having a common shape was brought into equilibrium with air, and then 10 ml of the mixed liquid was added to the PET bottle. The PET bottle was allowed to stand with its bottom facing down, and the mixed liquid was brought into contact with carbon dioxide. The carbon dioxide concentration in the PET bottle was measured using a carbon dioxide monitor (RI-85, manufactured by RIKEN KEIKI Co., Ltd.) at 0 minutes after (immediately after the contact), 15 minutes after, 30 minutes after, 60 minutes after, and overnight after the contact.

The results are shown in FIG. 19. FIG. 19 is a graph showing the carbon dioxide concentration in the PET bottle after the contact. In FIG. 19, the vertical axis indicates the carbon dioxide concentration (PPM) and the horizontal axis indicates the elapsed time after the contact (minutes). It is to be noted that each value of the carbon dioxide concentration was an average value of measured values of a total of 4 samples at 0 minutes after (immediately after the contact), 15 minutes after, 30 minutes after, and 60 minutes after the contact. It is to be noted that, the measured values of a total of 6 samples after overnight contacting were all 0 PPM. As shown in FIG. 19, due to the contact, the carbon dioxide concentration in the PET bottle was decreased according to the elapsed time after the contact. Further, since the value of the carbon dioxide concentration became 0 PPM after overnight contacting, it was found that even a low concentration carbon dioxide can be fixed according to the present invention.

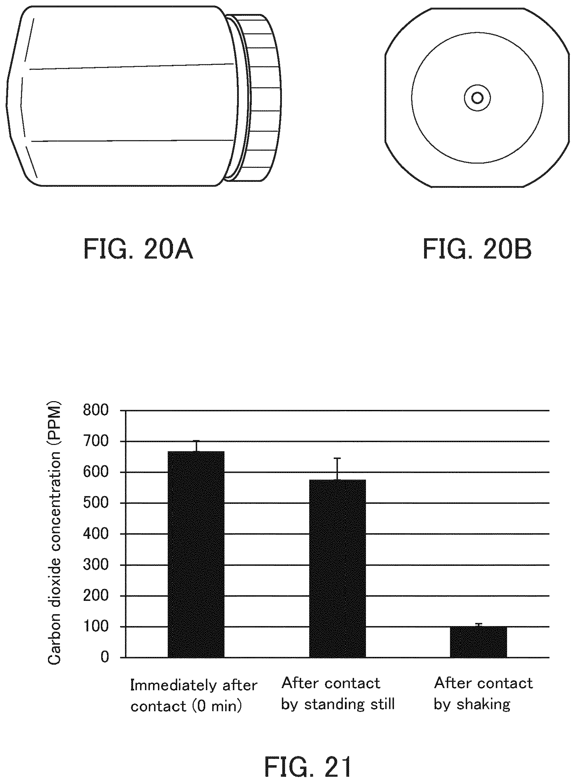

Next, the contact was carried out for 5 minutes in the same manner as described above except that an octagonal prism plastic bottle of the shape shown in FIG. 20 was used instead of the PET bottle, and the octagonal prism plastic bottle was allowed to stand in a state of being overturned with its side facing down or the octagonal prism plastic bottle was shaken in a state of being overturned with its side facing down. FIG. 20A is a view of the octagonal prism plastic bottle as viewed from the lateral direction and FIG. 20B is a view of the octagonal prism plastic bottle as viewed from the bottom. The shaking was performed using a shaker (BR-21UM, manufactured by TAITEK Corporation) at 120 rpm.

The results are shown in FIG. 21. FIG. 21 is a graph showing the carbon dioxide concentration in the octagonal prism plastic bottle after the contact. In FIG. 21, the vertical axis indicates the carbon dioxide concentration (PPM), and the horizontal axis indicates, from the left, immediately after the contact (0 min), after contact by the standing still, and after contact by the shaking. It is to be noted that each value of the carbon dioxide concentration was an average value of measurement values of a total of 4 samples. As shown in FIG. 21, the carbon dioxide concentration in the octagonal prism plastic bottle was decreased due to the contact by the shaking as compared to that immediately after the contact. Specifically, the carbon dioxide concentration in the octagonal prism plastic bottle was greatly decreased to about 1/6 due to the contact by the shaking as compared to that immediately after the contact, which showed that more carbon dioxide can be fixed due to the contact by the shaking.

As described above, the carbon dioxide concentration was greatly decreased due to the contact by the shaking as compared to that by the contact in a state of standing still. It is considered that the reason for this is that, due to the shaking, the surface area of the mixed liquid increases, so that the mixed liquid can be brought into contact with more gas containing the carbon dioxide. Further, it is considered that, since the octagonal prism plastic bottle has more planar bottom and short dimension as compared to a PET bottle of a common shape, the surface area of the mixed liquid is further increased.

Next, the contact was carried out under a different shaking condition. Instead of the octagonal prism plastic bottle, the 2 l-PET bottle having a common shape was used. Twelve hours before the contact, the cap of the PET bottle was opened, a tip of the Pasteur pipet was inserted into the mouth of the PET bottle, and carbon dioxide was fed from the tip. Then, 50 ml of the mixed liquid was fed into the PET bottle, and then vigorously shaken by an adult male hand 1 to 6 times with a shaking of 30 seconds as a single shake. The first contact by the shaking was performed immediately after the contact, and the second to sixth contacts by the shaking were performed 2 minutes after, 5 minutes after, 15 minutes after, 30 minutes after, and 60 minutes after the completion of the contact, respectively. Then, after the first to sixth contacts, the carbon dioxide concentration was measured using a carbon dioxide detector (XP-3140, manufactured by NEW COSMOS ELECTRIC CO., LTD.).

Further, after the sixth contact, 50 ml of the mixed liquid was further added and shaken vigorously for 30 seconds, and then the carbon dioxide concentration was measured. Thereafter, the carbon dioxide concentration was further measured after being stand still for 24 hours. Further, after being stand still for 24 hours, 50 ml of the mixed liquid was further added, the mixed liquid was shaken vigorously for 30 seconds, and then the carbon dioxide concentration was measured.

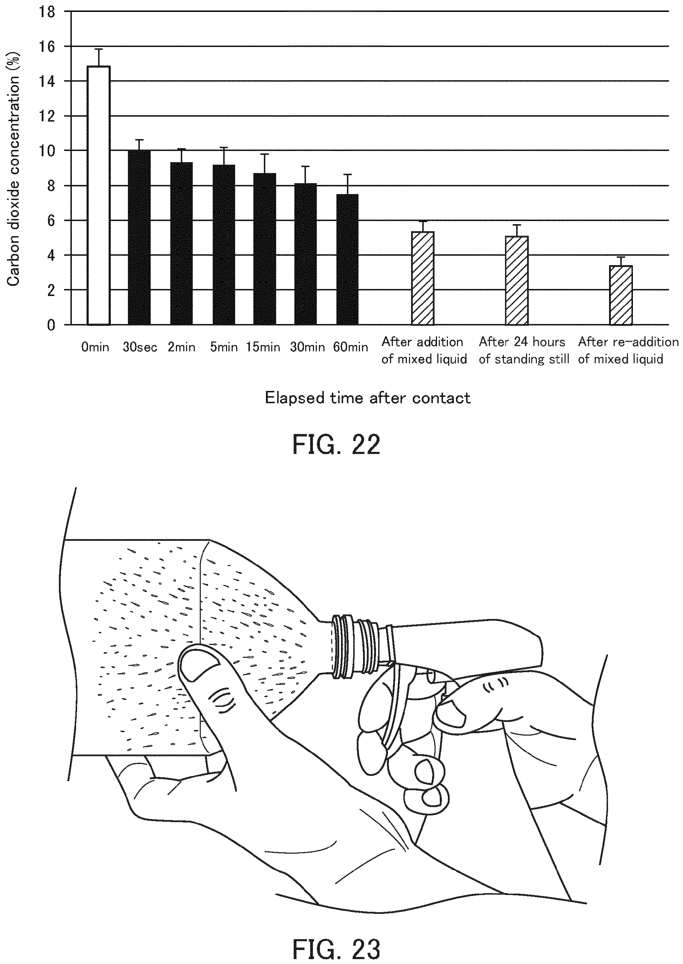

The results are shown in FIG. 22. FIG. 22 is a graph showing the carbon dioxide concentration in the PET bottle after the contact. In FIG. 22, the vertical axis indicates the carbon dioxide concentration (%), the horizontal axis indicates, from the left, immediately after the contact (0 minutes), after the contact by the first shaking (30 seconds), after the contact by the second shaking (2 minutes), after the contact by the third shaking (5 minutes), after the contact by the fourth shaking (15 minutes), after the contact by the fifth shaking (30 minutes), after the contact by the sixth shaking (60 minutes), after addition of the mixed liquid, after 24 hours of standing still, and after re-addition of the mixed liquid. It is to be noted that each value of the carbon dioxide concentration was an average value of measured values of a total of 5 samples. As shown in FIG. 22, the carbon dioxide concentration was greatly decreased after the first contact (30 seconds) as compared to that immediately after the contact (0 minutes). The carbon dioxide concentration was decreased slowly after the second to sixth contacts. On the other hand, the addition of the mixed liquid caused a sharp further decrease in carbon dioxide concentration. A remarkable decrease in the carbon dioxide concentration was also observed in the re-addition of the mixed liquid. Thus, it was verified that, the carbon dioxide concentration was decreased even in a state of a high carbon dioxide concentration, by adding the mixed liquid again.

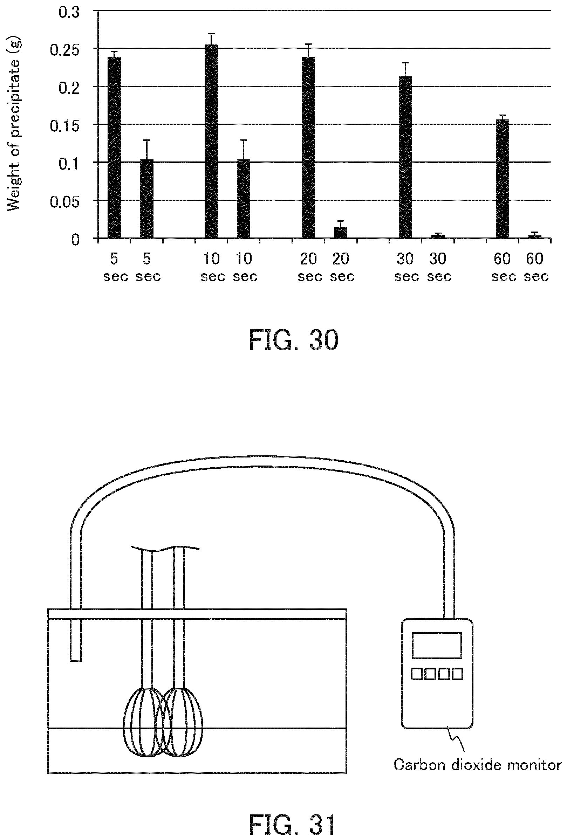

Further, the contact was carried out under a different shaking condition. Instead of the PET bottle, a 1.85 l-plastic box (commercially available one) shown in FIG. 31 was used. In FIG. 31, the inside of the plastic box is shown in a perspective manner. The contact was carried out by feeding 500 ml of the 0.1 N sodium hydroxide solution and 500 ml of the 0.1 mol/l calcium chloride solution in the plastic box, followed by full rotations (number 3: "whisk-whisk egg whites finely" mode) using a hand mixer (HM-20, 60W, manufactured by TOSHIBA CORPORATION). Then, the carbon dioxide concentration in the plastic box was measured using the carbon dioxide monitor. About 2 minutes after the start of the contact, it was confirmed that the carbon dioxide concentration became almost constant, and the contact was terminated. The measured value of the carbon dioxide concentration at the termination of the contact was acquired. Also, as a control, the carbon dioxide concentration of air outside the plastic box was measured.

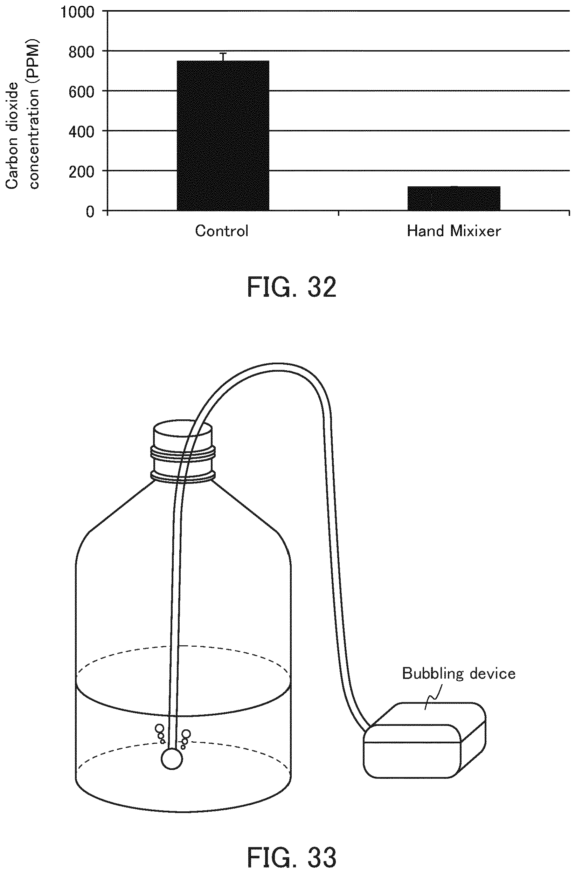

The results are shown in FIG. 32. FIG. 32 is a graph showing the carbon dioxide concentration in the plastic box after the contact. In FIG. 32, the vertical axis indicates the carbon dioxide concentration (PPM), and the horizontal axis indicates, from the left, the control and the termination of the contact (Hand Mixer). It is to be noted that the value of the carbon dioxide concentration was an average value of measured values of a total of 3 samples. As shown in FIG. 32, after the contact, the carbon dioxide concentration was greatly decreased as compared to that of the control.

As described above, it was verified that carbon dioxide can be fixed by bringing a mixed liquid containing sodium hydroxide and calcium chloride into contact with a gas containing carbon dioxide in a state where the mixed liquid is allowed to stand or shaken in a vessel.

### Reference Example 4

It was examined that carbon dioxide can be fixed by bringing a mixed liquid containing sodium hydroxide and calcium chloride into contact with a gas containing carbon dioxide in a state where the mixed liquid is in a state of mist in a vessel.

A mixed liquid containing the sodium hydroxide and the calcium chloride was prepared in the same manner as in Reference Example 3. A 2 l-PET bottle having a common shape was used, and the inside of the PET bottle was brought into equilibrium with air in the same manner as in Reference Example 3. Thereafter, about 4 ml of the mixed liquid was sprayed into the PET bottle 10 times at intervals of 5 seconds using a sprayer (commercially available one), whereby the mixed liquid was brought into contact with carbon dioxide. The contact was carried out using the PET bottle in a state of being overturned with its side facing down as shown in FIG. 23, and the spraying was carried out in the horizontal direction. Immediately after the contact, the carbon dioxide concentration in the PET bottle was measured in the same manner as in Reference Example 3.

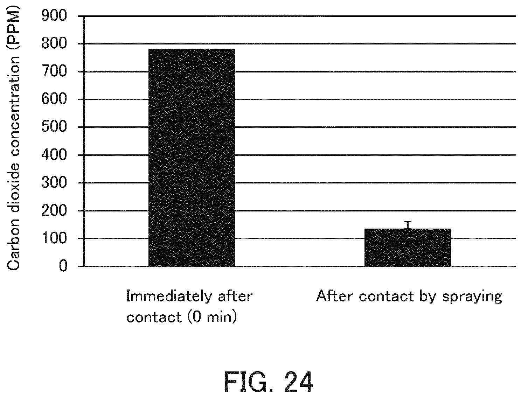

The results are shown in FIG. 24. FIG. 24 is a graph showing the carbon dioxide concentration in the PET bottle after the contact. In FIG. 24, the vertical axis indicates the carbon dioxide concentration (PPM), and the horizontal axis indicates, from the left, immediately after the contact (0 min) and after the contact by spraying. It is to be noted that each value of the carbon dioxide concentration was an average value of measurement values of a total of 4 samples. As shown in FIG. 24, the carbon dioxide concentration in the PET bottle was greatly decreased to about 1/6 due to the contact by the spraying as compared to that immediately after the contact.

Thus, the carbon dioxide concentration was greatly decreased in a short time due to the contact by the spraying. It is considered that the reason for this is that the surface area of the mixed liquid increases greatly by bringing the mixed liquid in a state of mist into contact with the carbon dioxide, so that the mixed liquid can be brought into contact with more gas containing the carbon dioxide.

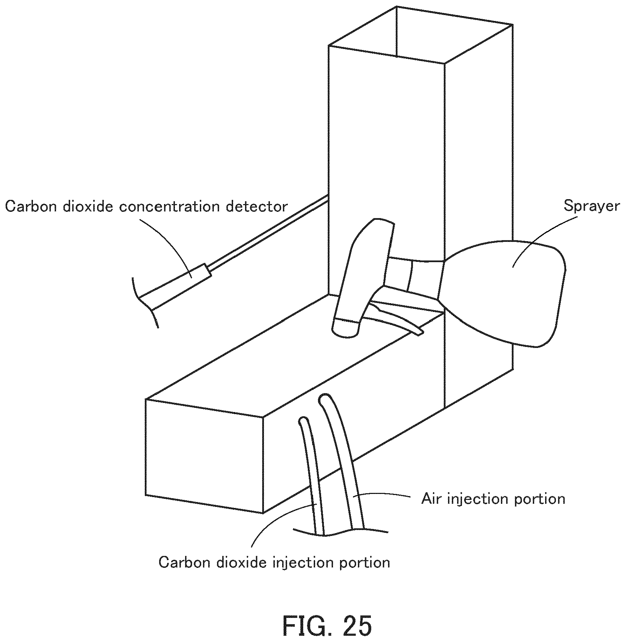

Next, the contact was carried out under a different spraying condition. The contact unit for carrying the contact was prepared as follows. As shown in FIG. 25, two boxes, which are milk packs, (commercially available ones) were connected in an L-shape, holes were formed at two places on the side surface of the lower box by partially cutting it, and silicon tubes were inserted through the holes, thereby providing an air injection portion and a carbon dioxide injection portion. In addition, a hole was formed on the upper surface of the lower box in the same manner so that the mixed liquid can be sprayed from the sprayer into the inside of the box. A large opening was formed at the connection site of the upper and lower boxes to allow carbon dioxide to rise from the lower box to the upper box. The connection site was provided with a gauze layer with 4 fold gauzes (commercially available one). The upper surface of the upper box was opened. In addition, a hole was formed on the side surface of the upper box in the same manner, and a nozzle of a carbon dioxide concentration detector (XP-3140, manufactured by NEW COSMOS ELECTRIC CO., LTD.) was installed.

The injection was carried out with the flow rate of air from the air injection portion being about 100 cm³/sec and the flow rate of carbon dioxide from the carbon dioxide injection portion being 10 until the measured carbon dioxide concentration becomes constant. Thereafter, the mixed liquid was sprayed 10 consecutive times from the sprayer. The spray amount of the mixed liquid was about 4 ml in total at 10 times. The measured value of the carbon dioxide concentration became the lowest value at about 20 seconds after the spraying.

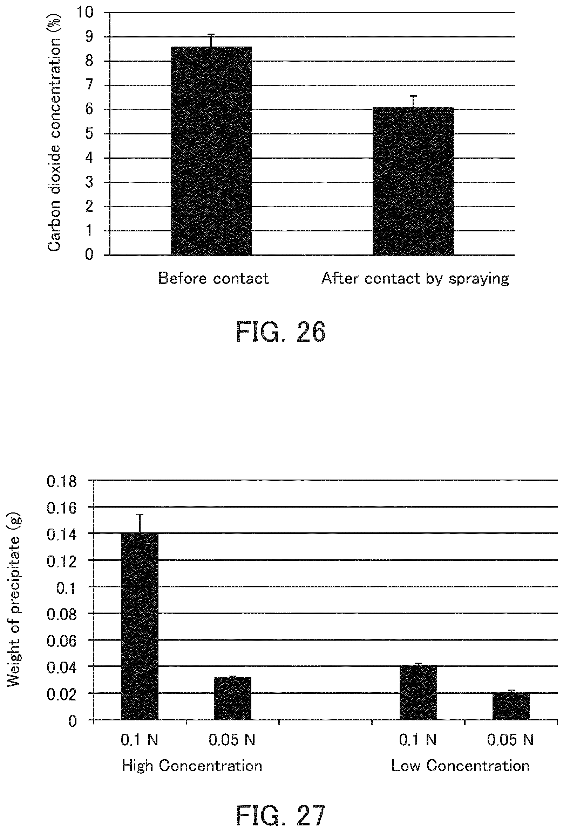

The results are shown in FIG. 26. FIG. 26 is a graph showing the carbon dioxide concentration in the box when the measured value of carbon dioxide becomes the lowest value at about 20 seconds after the contact. In FIG. 26, the vertical axis indicates the carbon dioxide concentration (%) and the horizontal axis indicates, from the left, before the contact and after the contact by the spraying. It is to be noted that each value of the carbon dioxide concentration was an average value of measurement values of a total of 10 samples. As shown in FIG. 26, the carbon dioxide concentration in the box was decreased due to contact by the spraying as compared to that before the contact.

As described above, it was verified that carbon dioxide can be absorbed by the mixed liquid even when the contact unit is an open system. Further, since the amount of the mixed liquid sprayed was as small as about 4 ml, it was found that a high carbon dioxide concentration can be sufficiently lowered even if the amount of the mixed liquid is small. This showed that the reaction system of the present invention has extremely excellent reaction efficiency.

As described above, it was verified that carbon dioxide can be fixed by bringing a mixed liquid containing sodium hydroxide and calcium chloride into contact with a gas containing carbon dioxide in a state where the mixed liquid is in a state of mist in a vessel.

### Reference Example 5

It was examined that carbon dioxide can be fixed by a first contact step of bringing a solution containing sodium hydroxide (NaOH) into contact with a gas containing carbon dioxide (CO₂) and a second contact step of adding calcium chloride (CaCl₂) to the solution after the first contact step.

As a solution containing sodium hydroxide, a 1 N sodium hydroxide solution (manufactured by Wako Pure Chemical Industries, Ltd.) was used. Further, a 1 mol/l calcium chloride solution (manufactured by Wako Pure Chemical Industries, Ltd.) was diluted with distilled water to prepare a 0.1 mol/l calcium chloride solution.

5 ml of the 1 N sodium hydroxide solution was fed into a 10 ml-test tube, and, by bubbling carbon dioxide (CO₂ 100%, manufactured by KOIKE SANSO KOGYO CO., LTD.), the carbon dioxide was brought into contact with the solution (first contact step). The bubbling was performed by ejecting carbon dioxide from the tip of a Pasteur pipette. The bubbling condition was 2 for 40 seconds. The sizes of the bubbles in the bubbling were visually measured by comparison with a scale and were on the order of millimeters to centimeters.

Next, the solution after the first contact was diluted with distilled water so as to have predetermined concentrations (0.1 N and 0.05 N). 3 ml of the diluted solution was fed into a 10 ml-test tube, and 3 ml of the 0.1 mol/l calcium chloride solution was added to the solution (second contact step). After the contact, the mixed liquid after the addition was centrifuged at 3000 rpm for 10 minutes. Then, before and after the contact, the weight of the test tube was measured, and the difference in the weight before and after the contact was calculated as the precipitation amount.

Then, in order to examine the concentration effect of sodium hydroxide on the absorption of carbon dioxide, the following experiment was conducted. The 1 N sodium hydroxide solution was diluted with distilled water so as to have predetermined concentrations (0.1 N and 0.05 N). 3 ml of sodium hydroxide solution having the predetermined concentration was fed into a 10 ml-test tube, and by bubbling carbon dioxide, the carbon dioxide was brought into contact with the solution (first contact step). The bubbling condition was 2 cm³/sec for 20 seconds. Then, 3 ml of the 0.1 mol/l calcium chloride solution was added to the solution (second contact step). After the addition, the precipitation amount was calculated in the same manner as described above.

The results are shown in FIG. 27. FIG. 27 is a graph showing the weight of the precipitate produced in the mixed liquid due to contact with the carbon dioxide. In FIG. 27, the vertical axis indicates the weight (g) of the precipitate per test tube and the horizontal axis indicates the experimental conditions. The left-hand graph shows the result of the first step using a 1 N sodium hydroxide solution ("High Concentration"), and the right-hand graph shows the result of the first step using the diluted sodium hydroxide solution ("Low Concentration"). It is to be noted that each value of the weight of the precipitate was an average value of measured values of 4 samples. As shown in FIG. 27, as a result of performing the first contact step and the second contact step, the precipitate was produced at either concentration in the first contact step. Furthermore, as the concentration in the first contact step increased, the larger the amount of the precipitate was produced.

Furthermore, it was verified that the sodium hydrogen carbonate (NaHCO₃) and sodium carbonate (Na₂CO₃) produced in the first step were reacted with calcium chloride in the second step to produce the precipitate.

A 0.5 mol/l calcium chloride solution was prepared in the same manner as described above. 1 ml of a 1 N sodium hydrogen carbonate solution (manufactured by Wako Pure Chemical Industries, Ltd.), 1 ml of distilled water, and 2 ml of the 0.5 mol/l calcium chloride solution were fed into a 10 ml-test tube and mixed using a vortex mixer. Thereafter, the precipitation amount of the produced precipitate was calculated in the same manner as described above.

Then, 2 ml of a 0.5 mol/l sodium carbonate solution (manufactured by Wako Pure Chemical Industries, Ltd.) and 2 ml of the 0.5 mol/l calcium chloride solution were mixed, and the precipitation amount of the produced precipitate was calculated in the same manner as described above.

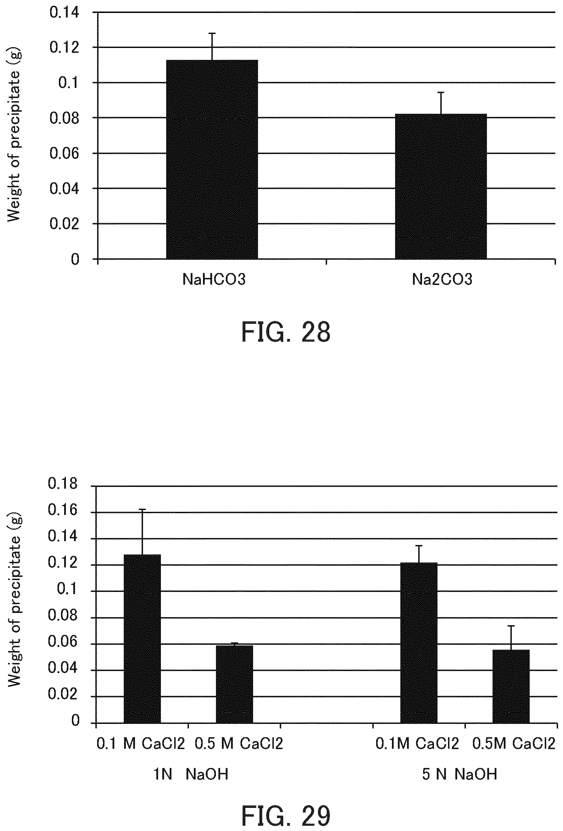

The results are shown in FIG. 28. FIG. 28 is a graph showing the weight of the precipitate produced in the mixed liquid due to contact with the carbon dioxide. In FIG. 28, the vertical axis indicates the weight (g) of the precipitate per test tube and the horizontal axis indicates the experimental conditions. It is to be noted that each value of the weight of the precipitate was an average value of measured values of a total of 4 samples. As shown in FIG. 28, each of the sodium hydrogen carbonate solution and the sodium carbonate solution produced a precipitate by reaction with the calcium chloride solution.

As described above, it was verified that carbon dioxide can be fixed by the first contact step of bringing a solution containing sodium hydroxide into contact with a gas containing carbon dioxide and the second contact step of adding calcium chloride to the solution and further bringing the mixed liquid after the addition into contact with the gas containing carbon dioxide after the first contact step. Further, it was verified that the sodium hydrogen carbonate and sodium carbonate produced in the first step were reacted with calcium chloride in the second step, resulting in precipitation.

### Reference Example 6

It was examined that carbon dioxide can be fixed even if the concentrations of the sodium hydroxide solution and the calcium chloride solution were changed.

In the same manner as in Reference Example 5, a 1 N sodium hydroxide solution was used. Further, as the solution containing sodium hydroxide, a 5 N sodium hydroxide solution (manufactured by Wako Pure Chemical Industries, Ltd.) was used. In addition, in the same manner as in Reference Example 5, the calcium chloride solutions having concentrations of 0.1 mol/l and 0.5 mol/l were prepared.

The first contact step and the second contact step were carried out in the same manner as in Reference Example 5 using the sodium hydroxide solutions having concentrations of 1 N and 5 N and the calcium chloride solutions having concentrations of 0.1 mol/l and 0.5 mol/l. Provided that, only when the 5 N sodium hydroxide solution was used, the bubbling time in the first contact step was set to 50 seconds instead of 20 seconds. Then, in the same manner as in Reference Example 5, the precipitation amount was calculated.

The results are shown in FIG. 29. FIG. 29 is a graph showing the weight of the precipitate produced in the mixed liquid due to contact with the carbon dioxide. In FIG. 29, the vertical axis indicates the weight (g) of the precipitate per test tube and the horizontal axis indicates experimental conditions. The left-hand graph shows the result of the first step using the 1 N sodium hydroxide solution (1N NaOH) and the right-hand graph shows the result of the first step using the 5 N sodium hydroxide solution (5N NaOH). In each graph, the left bar shows the result obtained by using the 0.1 mol/l calcium chloride solution (0.1M CaCl₂) and the right bar shows the result obtained by using the 0.5 mol/l calcium chloride solution (0.5M CaCl₂). It is to be noted that each value of the weight of the precipitate was an average value of measured values of a total of 5 samples. As shown in FIG. 29, the precipitate was produced at either concentration of the sodium hydroxide solution and the calcium chloride solution. As a result of setting the concentration of the sodium hydroxide solution to 1 N and 5 N, almost the same value was obtained between them. As a result of setting the concentration of the calcium chloride solution to 0.1 mol/l and 0.5 mol/l, the precipitation amount was about a half value at either concentration of the sodium hydroxide solution with the 0.5 mol/l calcium chloride solution as compared to the case with the 0.1 mol/l calcium chloride solution. It was examined that more carbon dioxide could be fixed by using the 0.1 mol/l calcium chloride solution.

As described above, it was verified that carbon dioxide can be fixed even if the concentrations of the sodium hydroxide solution and the calcium chloride solution were changed.

### Reference Example 7

It was examined that carbon dioxide can be fixed even if the contact time with a gas containing carbon dioxide in the first contact step was changed. In addition, a mixed liquid containing sodium hydroxide and calcium chloride was brought into contact with a gas containing carbon dioxide without performing the first contact step and the second contact step, and the results were compared.

A 1 N sodium hydroxide solution was used in the same manner as in Reference Example 5. Further, the 0.1 mol/l calcium chloride solution was prepared.

The first contact step was performed in the same manner as in Reference Example 5 except that the bubbling condition was 5, 10, 20, 30, or 60 seconds.

Next, 9 ml of distilled water was added to the solution after the first contact to dilute so as to achieve the concentration of about 0.1 N (approximate value based on the initial concentration). 3 ml of the diluted solution was fed into a 10 ml-test tube and 3 ml of the 0.1 mol/l calcium chloride solution was added to the solution (second contact step). After the contact, the mixed liquid was centrifuged in the same manner as in Reference Example 5. Then, in the same manner as in Reference Example 5, the precipitation amount was calculated.

As a comparative example, the following experiment was conducted. The 1 N sodium hydroxide solution was diluted with distilled water so as to achieve the concentration of 0.1 N. 3 ml of the 0.1 N sodium hydroxide solution and 3 ml of the 0.1 N calcium chloride solution were fed into a 10 ml-test tube and mixed, and, by bubbling carbon dioxide, the carbon dioxide was brought into contact with the mixed liquid in the same manner as described above. After the addition, the precipitation amount was calculated in the same manner as described above.

The results are shown in FIG. 30. FIG. 30 is a graph showing the weight of the precipitate produced in the mixed liquid due to contact with the carbon dioxide. In FIG. 30, the vertical axis indicates the weight (g) of the precipitate per test tube and the horizontal axis indicates the bubbling time. In each bubbling time, the left bar shows the result obtained by performing the first contact step and the second contact step and the right bar shows the result of the comparative example. It is to be noted that each value of the weight of the precipitate was an average value of a total of 3 measurements. As shown in FIG. 30, as a result of performing the first contact step and the second contact step, the precipitate was produced at either bubbling time. Approximately the same precipitation amount was obtained in the bubbling for 5 to 30 seconds. Even when bubbling was performed for 60 seconds, a sufficient precipitation amount was obtained, although it was slightly decreased. In the case of the comparative example, while the precipitate was produced in the bubbling for 5 to 10 seconds, the precipitation amount was less than or equal to half of the result of performing the first contact step and the second contact step. Moreover, the precipitation amount was greatly decreased when bubbling was performed for more than 20 seconds.

As described above, it was verified that carbon dioxide can be fixed even if the contact time with the gas containing carbon dioxide in the first contact step is changed. Furthermore, it was found that, when the first contact step and the second contact step are performed, carbon dioxide can be more efficiently fixed as compared to a case where a mixed liquid containing sodium hydroxide and calcium chloride is brought into contact with a gas containing carbon dioxide without performing the first contact step and the second contact step.

### Reference Example 8

It was examined that carbon dioxide can be fixed by bringing a mixed liquid containing sodium hydroxide and calcium chloride into contact with a gas containing carbon dioxide by bubbling the gas into the mixed liquid.

A mixed liquid containing the 0.05 N sodium hydroxide and the 0.05 mol/l calcium chloride was prepared in the same manner as in Reference Example 6. 500 ml of the mixed liquid was fed into a plastic bottle (commercially available one, 7.5 cm in width, 7.5 cm in depth, 12 cm in height). Then, as shown in FIG. 33, by bubbling air using a bubbling device for aquarium organism (product name: Bukubuku (one assembled from an air pump, a hose, and an air stone included in the set), manufactured by Kotobuki Kogei Co., Ltd.), the mixed liquid was brought into contact with the air. In FIG. 33, the inside of the plastic bottle is shown in a perspective manner. The bubbling was performed at 20 for 9 hours and 12 hours. The sizes of the bubbles in the bubbling were visually measured by comparison with a scale and were on the order of micrometers to millimeters. After the contact, 5 ml of the mixed liquid was acquired and centrifuged at 3000 rpm for 10 minutes, and then the weight of the precipitate was measured. In addition, an experiment was carried out in the same manner as described above except that a mixed air having a carbon dioxide concentration of 15% obtained by mixing the carbon dioxide into the air was used instead of the air and the bubbling was carried out for 1.5 hours.

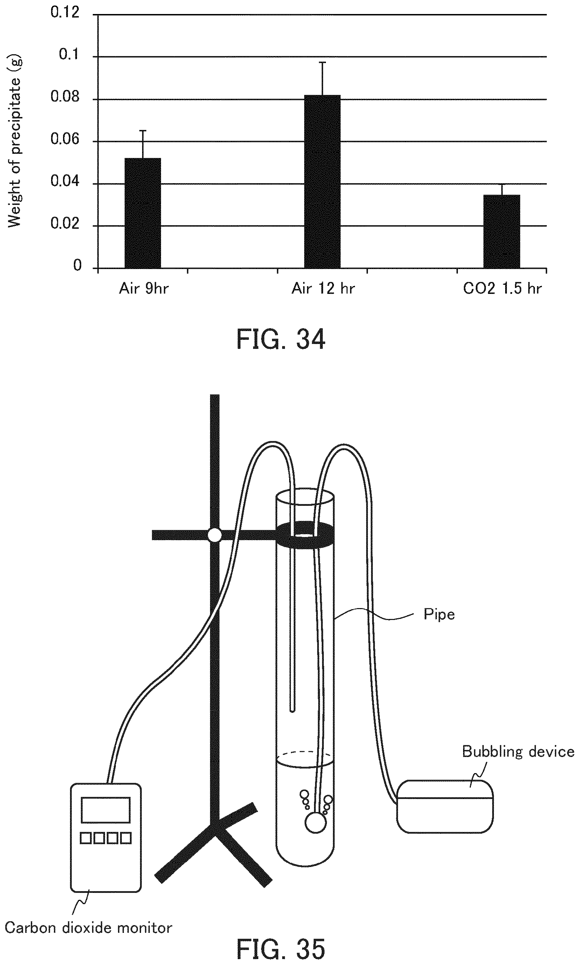

The results are shown in FIG. 34. FIG. 34 is a graph showing the weight of the precipitate produced in the mixed liquid due to contact with the carbon dioxide. In FIG. 34, the vertical axis indicates the weight (g) of the precipitate and the horizontal axis indicates experimental conditions. It is to be noted that each value of the weight of the precipitate was an average value of measured values of a total of 4 samples of the mixed liquid. As shown in FIG. 34, the precipitate was produced by the bubbling of the air and the mixed air. In the bubbling of the air, the amount of precipitate was increased with the elapse of time.

Next, the experiment was carried out using a vessel in a different form. As the vessel, a vinyl chloride pipe (commercially available one) having a diameter of 40 mm and a height of 50 cm was used instead of the plastic bottle. A pipe cap (commercially available one) was attached to one end serving as the bottom of the pipe. FIG. 35 is a schematic diagram for explaining the form of the pipe. It is to be noted that the inside of the pipe is shown in a perspective manner in FIG. 35. In addition, the 0.1 N sodium hydroxide solution and the 0.1 mol/l calcium chloride solution were prepared in the same manner as in Reference Example 5. 250 ml of the sodium hydroxide solution and 250 ml of the calcium chloride solution were fed into the pipe and, by bubbling air for about 1 minute, the mixed liquid was brought into contact with the air in the same manner as described above. After the contact, the carbon dioxide concentration of the gas in the upper space of the pipe (height: about 14 cm) was measured in the same manner as in Example 6. Further, the carbon dioxide concentration of the air was measured in the same manner.

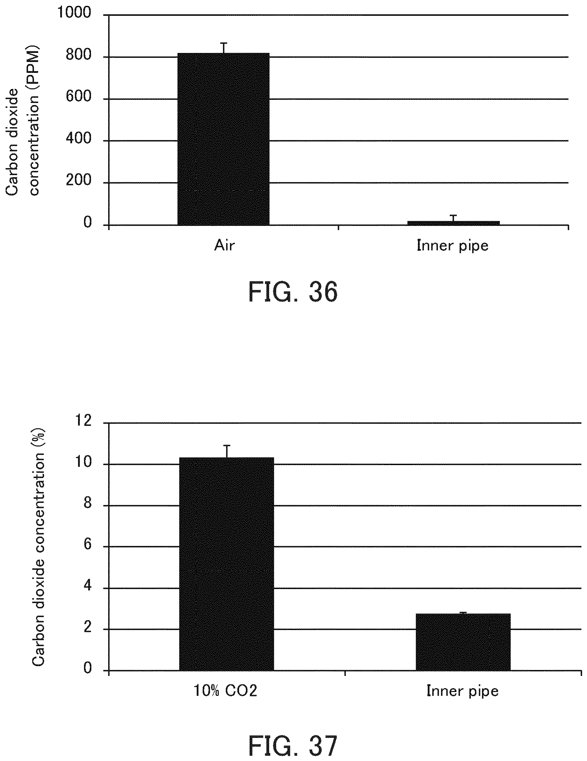

The results are shown in FIG. 36. FIG. 36 is a graph showing the carbon dioxide concentration in the pipe after the contact. In FIG. 36, the vertical axis indicates the carbon dioxide concentration (PPM) and the horizontal axis indicates, from the left, the air (Air) and the gas in the upper space of the pipe (Inner Pipe). It is to be noted that each value of the carbon dioxide concentration was an average value of measured values of a total of 9 samples. As shown in FIG. 36, the carbon dioxide concentration in the pipe was greatly decreased by the contact.

Next, the experiment was carried out in the same manner as described above except that a mixed air having a carbon dioxide concentration of 10% obtained by mixing the carbon dioxide into the air was used instead of the air.

The results are shown in FIG. 37. FIG. 37 is a graph showing the carbon dioxide concentration in the pipe after the contact. In FIG. 37, the vertical axis indicates the carbon dioxide concentration (%) and the horizontal axis indicates, from the left, experimental conditions. It is to be noted that each value of the carbon dioxide concentration was an average value of measured values of a total of 3 samples. As shown in FIG. 37, the carbon dioxide concentration in the pipe was decreased by the contact.

Next, the experiment was carried out with a different amount of the mixed liquid. A mixed liquid containing the 0.05 N sodium hydroxide and the 0.05 mol/l calcium chloride was prepared in the same manner as in Reference Example 6. Each of 100 ml, 200 ml, 300 ml, 400 ml, and 500 ml of the mixed liquid was fed into the pipe, and, by bubbling air for 1 to 2 minutes, the mixed liquid was brought into contact with the air in the same manner as described above. In each of the above conditions, the heights of the liquid levels of the mixed liquids from the bottom surface of the pipe were 7, 14, 22, 29, and 36 cm. After the contact, the carbon dioxide concentration of the gas in the upper space of the pipe (about 10 cm from the upper end of the pipe) was measured in the same manner as in Example 6. Further, the carbon dioxide concentration of the air was measured in the same manner as described above.

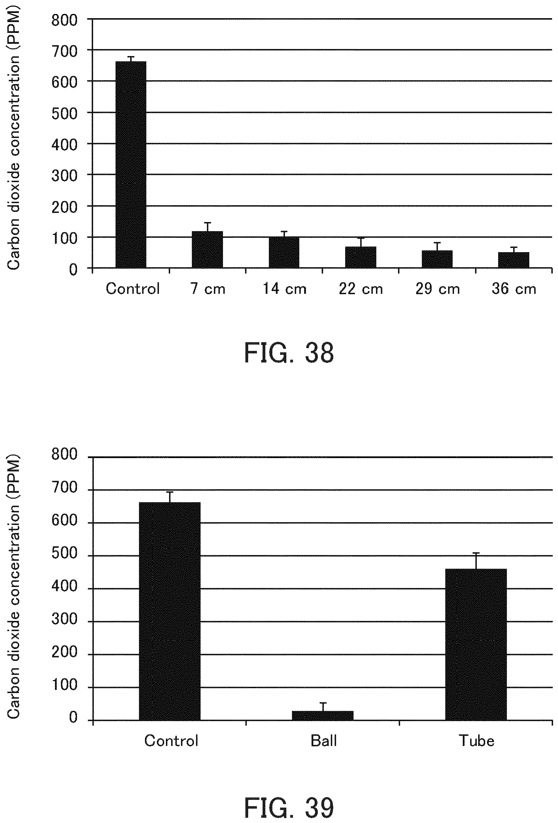

The results are shown in FIG. 38. FIG. 38 is a graph showing the carbon dioxide concentration in the pipe after the contact. In FIG. 38, the vertical axis indicates the carbon dioxide concentration (PPM) and the horizontal axis indicates, from the left, the air (Control) and the heights of the liquid level. It is to be noted that each value of the carbon dioxide concentration was an average value of measured values of a total of 3 samples. As shown in FIG. 38, the carbon dioxide concentration in the pipe was greatly decreased by the contact even when the height of the liquid level was 7 cm. Further, as the height of the liquid level (the amount of the mixed liquid) increased, the more carbon dioxide concentration was decreased.

Next, the experiment was carried out with a different form of the contact. A mixed liquid containing the 0.05 N sodium hydroxide and the 0.05 mol/l calcium chloride was prepared in the same manner as in Reference Example 6. 500 ml of the mixed liquid was fed into the pipe and, by bubbling air for 1 to 2 minutes, the mixed liquid was brought into contact with the air in the same manner as described above. On the other hand, the experiment was carried out in the same manner as described above except that the air stone connected to the tip of the hose of the bubbling device was taken out, and, by directly bubbling air from the hose (about 5 mm in diameter, made of silicon), the mixed liquid was brought into contact with the air. The sizes of the bubbles in the bubbling were visually measured by comparison with a scale and were on the order of millimeters to centimeters. After the contact, the carbon dioxide concentration was measured in the same manner as described above. Further, the carbon dioxide concentration of the air was measured in the same manner.

The results are shown in FIG. 39. FIG. 39 is a graph showing the carbon dioxide concentration in the pipe after the contact. In FIG. 39, the vertical axis indicates carbon dioxide concentrations (PPM) and the horizontal axis indicates, from the left, air (Control), bubbling from the air stone (Ball), and bubbling from the hose (Tube). It is to be noted that each value of the carbon dioxide concentration was an average value of measurement values of a total of 4 samples. As shown in FIG. 39, the carbon dioxide concentration in the pipe was greatly decreased (down to 4.27%) by bubbling air from the air stone. On the other hand, although the carbon dioxide concentration was decreased (decreased to 69.49%) by bubbling air from the hose, the amount of decrease was small compared with that by bubbling air from the air stone. From this, it was found that it is important that the sizes of bubbles are small in the bubbling in the absorption of carbon dioxide.

As described above, it was verified that carbon dioxide can be fixed by bringing a mixed liquid containing sodium hydroxide and calcium chloride into contact with a gas containing carbon dioxide by bubbling the gas into the mixed liquid.

### Reference Example 9

It was examined that carbon dioxide can be absorbed by bringing a solution containing sodium hydroxide into contact with a gas containing carbon dioxide.

The 0.05 N sodium hydroxide solution was prepared in the same manner as in Reference Example 5. A 2 l-PET bottle having a common shape was used, and the inside of the PET bottle was brought into equilibrium with air in the same manner as in Reference Example 6. Thereafter, 10 ml of the sodium hydroxide solution was fed into the PET bottle and allowed to stand, whereby the solution was brought into contact with carbon dioxide in the atmosphere. The carbon dioxide concentration in the PET bottle at 0 minutes after (immediately after the contact), at 15 minutes after, at 30 minutes after, and at 60 minutes after the contact was measured in the same manner as in Reference Example 6.

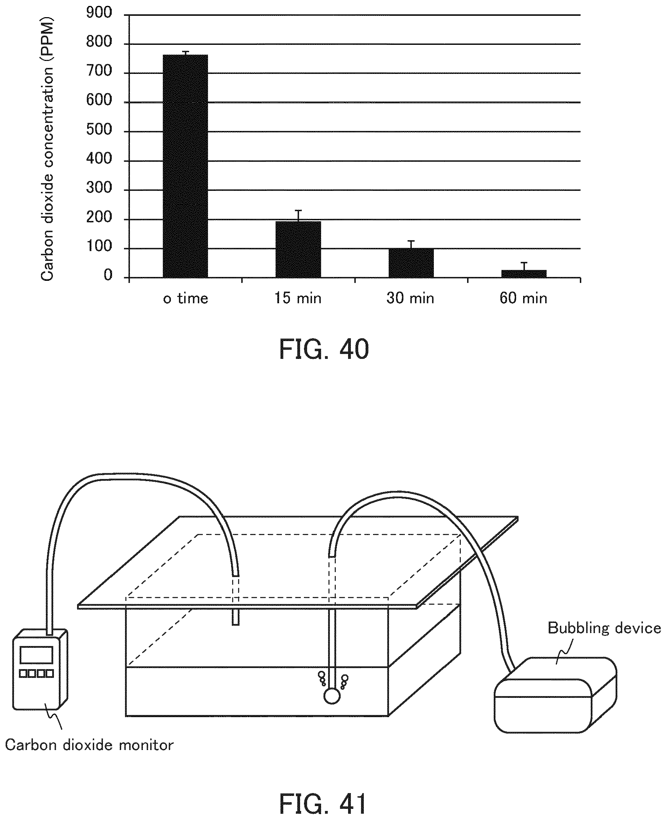

The results are shown in FIG. 40. FIG. 40 is a graph showing the carbon dioxide concentration in the PET bottle after the contact. In FIG. 40, the vertical axis indicates the carbon dioxide concentration (PPM) and the horizontal axis indicates the elapsed time (min) after the contact. It is to be noted that each value of the carbon dioxide concentration was an average value of measured values of a total of 3 samples. As shown in FIG. 40, the carbon dioxide concentration in the PET bottle was decreased at 15 minutes after, at 30 minutes after, and at 60 minutes after the contact as compared to that immediately after the contact.

Next, the contact was carried out with a different form of the contact. Instead of the PET bottle, a 2 l-plastic box (commercially available one) shown in FIG. 41 was used. In FIG. 41, the inside of the plastic box is shown in a perspective manner. 500 ml of the 0.1 N sodium hydroxide solution was fed into the plastic box, and then the upper side of the plastic box was covered with a plastic plate as shown in FIG. 41. By bubbling air using a bubbling device (product name: Micro bubbler (F-1056-002) manufactured by Fron Industry Co., Ltd.), the solution was brought into contact with the air. The bubbling was performed at 20 cm³/sec. The sizes of the bubbles in the bubbling were visually measured by comparison with a scale and were on the order of micrometers to millimeters. Then, the carbon dioxide concentration in the upper space in the plastic box at immediately after (0 minutes), at 5 minutes after, at 10 minutes after, and at 15 minutes after the start of the contact was measured using the carbon dioxide monitor.

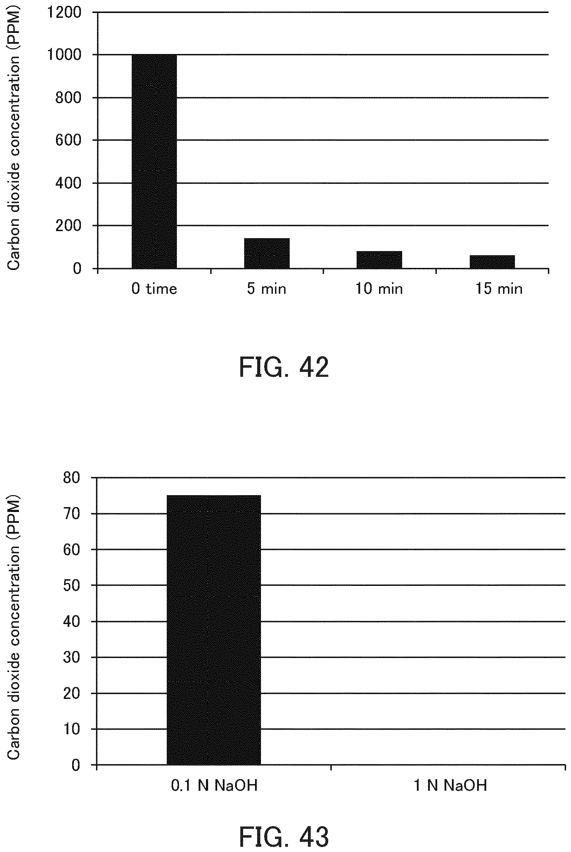

The results are shown in FIG. 42. FIG. 42 is a graph showing the carbon dioxide concentration in the plastic box after the contact. In FIG. 42, the vertical axis indicates the carbon dioxide concentration (PPM) and the horizontal axis indicates, from the left, immediately after (0 time), 5 minutes after (5 min), 10 minutes after (10 min), and 15 minutes after (15 min) the start of the contact. As shown in FIG. 42, the carbon dioxide concentration in the plastic box was greatly decreased at 5 minutes after the start of the contact. Thereafter, depending on the elapsed time after the contact, the carbon dioxide concentration was gradually decreased.

Next, the experiment was carried out using a vessel in a different form. As the vessel, the pipe described in Reference Example 8 was used instead of the plastic bottle. 200 ml of the 0.1 N sodium hydroxide solution was fed into the pipe and, by bubbling the mixed air having a carbon dioxide concentration of 10%, the solution was brought into contact with the mixed air in the same manner as described above. Then, the carbon dioxide concentration in the upper space in the pipe was measured using the carbon dioxide monitor continuously from the start of the contact until 5 minutes later. In addition, the carbon dioxide concentration was measured until 2 minutes after the start of the contact in the same manner as described above except that the 1 N sodium hydroxide solution was used.

The results are shown in FIG. 43. FIG. 43 is a graph showing the carbon dioxide concentration in the pipe at 2 minutes after the start of the contact. In FIG. 43, the vertical axis indicates the carbon dioxide concentration (PPM) and the horizontal axis indicates the sodium hydroxide solution concentration. As shown in FIG. 43, when the 0.1 N sodium hydroxide solution was used, the carbon dioxide concentration in the pipe was decreased rapidly immediately after the start of the contact and was decreased to 7.5% at 2 minutes after the contact as compared to the value immediately after the start of the contact. Thereafter, the concentration was almost constant until 5 minutes after the start of the contact. Further, when the 1 N sodium hydroxide solution was used, similarly, the carbon dioxide concentration in the pipe was decreased rapidly immediately after the start of the contact, and became "0" at 2 minutes after the contact.

As described above, it was verified that carbon dioxide can be absorbed by bringing a solution containing sodium hydroxide into contact with a gas containing carbon dioxide.

### Reference Example 10

It was examined that carbon dioxide can be fixed by bringing a mixed liquid containing sodium hydroxide and further containing a chloride of a Group 2 element and a chloride of a divalent metal element into contact with a gas containing carbon dioxide.

As the chloride of a Group 2 element and the chloride of a divalent metallic element, magnesium chloride (MgCl₂; manufactured by Wako Pure Chemical Industries, Ltd.), zinc chloride (ZnCl₂; manufactured by Wako Pure Chemical Industries, Ltd.), strontium chloride (SrCl₂, manufactured by Wako Pure Chemical Industries, Ltd.), and barium chloride (BaCh; manufactured by Wako Pure Chemical Industries, Ltd.) were used. Each of the chlorides was diluted with distilled water to prepare 0.1 mol/l of each metal chloride solution. In addition, the 0.1 N sodium hydroxide solution was prepared in the same manner as in Reference Example 5.

2 ml of each of the metal chloride solutions and 1 ml of the sodium hydroxide solution were mixed. By bubbling carbon dioxide, the mixed liquid was brought into contact with the carbon dioxide in the same manner as in Reference Example 5. After the mixing and after contact with the carbon dioxide, the precipitation amount was calculated in the same manner as in Reference Example 5.

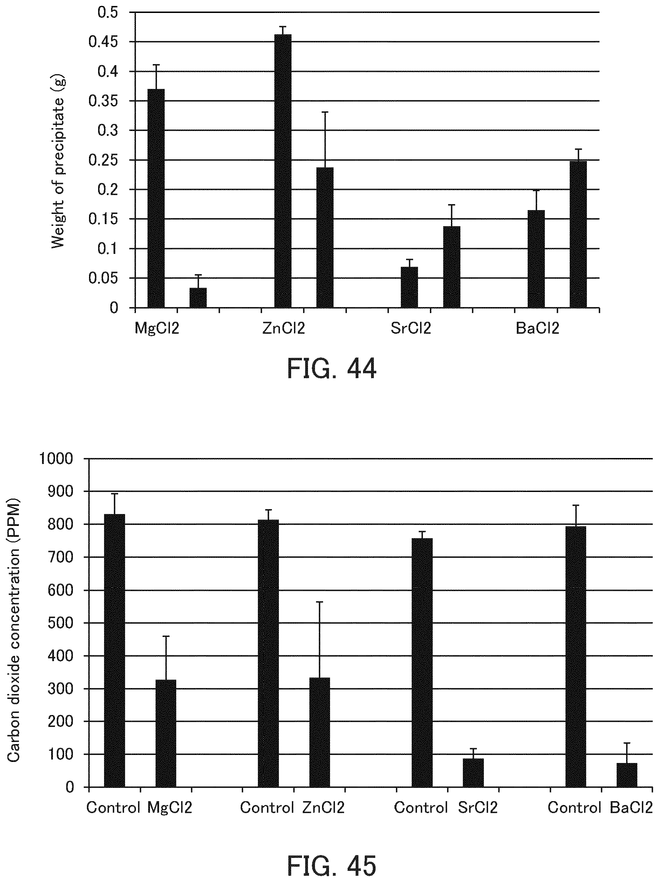

The results are shown in FIG. 44. FIG. 44 is a graph showing the weight of the precipitate produced in the mixed liquid due to contact with the carbon dioxide. In FIG. 44, the vertical axis indicates the weight (g) of the precipitate per test tube, and the horizontal axis indicates each metal chloride contained in the mixed liquid. Each left bar shows the result after the mixing and each right bar shows the result after contact with the carbon dioxide. It is to be noted that each value of the weight of the precipitate was an average value of measured values of a total of 4 samples of the mixed liquid. As shown in FIG. 44, when the magnesium chloride solution and the zinc chloride solution were used, the precipitation amount was increased greatly after the mixing, and the precipitation amount was decreased after contact with the carbon dioxide. Further, when the strontium chloride solution and the barium chloride solution were used, the precipitation amount was increased after the mixing, and the precipitation amount was further increased after contact with the carbon dioxide.

Next, the chloride of a Group 2 element and the chloride of a divalent metal element were used, and the carbon dioxide concentration after the contact was measured.

The pipe described in Reference Example 8 was used as the vessel. 50 ml of the 0.1 N sodium hydroxide solution and 50 ml of each metal chloride solution having a concentration of 0.1 mol/l were fed into the pipe, and, by bubbling air, the mixed liquid was brought into contact with the air in the same manner as in Reference Example 8. After the contact, the carbon dioxide concentration of the gas in the upper space of the pipe (about 14 cm in height) was measured in the same manner as in Example 6. In the measurement, it was confirmed that the value of the carbon dioxide concentration became almost constant at 2 to 3 minutes after the contact, and this value was used as a measurement value. Further, as a control, the carbon dioxide concentration of the air was measured in the same manner.

The results are shown in FIG. 45. FIG. 45 is a graph showing the carbon dioxide concentration in the pipe after the contact. In FIG. 45, the vertical axis indicates the carbon dioxide concentration (PPM) and the horizontal axis indicates metal chlorides. It is to be noted that the value of the carbon dioxide concentration was an average value of measured values of a total of 3 samples. As shown in FIG. 45, the carbon dioxide concentration in the pipe was decreased due to the contact with any type of the metal chlorides as compared to the value of the control. In particular, when the strontium chloride solution and the barium chloride solution were used, the carbon dioxide concentration was greatly decreased.

As described above, it was verified that carbon dioxide can be fixed by bringing a mixed liquid containing sodium hydroxide and further containing a chloride of a Group 2 element and a chloride of a divalent metal element into contact with a gas containing carbon dioxide.

### Reference Example 11

It was examined that carbon dioxide can be fixed by bringing a mixed liquid containing sodium hydroxide and calcium chloride into contact with a gas containing carbon dioxide under a predetermined temperature condition.

A mixed liquid containing the 0.05 N sodium hydroxide and the 0.05 mol/l calcium chloride was prepared in the same manner as in Reference Example 6. 3 ml of the sodium hydroxide solution of each concentration and 3 ml of the 0.1 mol/l calcium chloride solution were fed into a 10 ml-test tube and mixed, and, by bubbling carbon dioxide, the mixed liquid was brought into contact with the carbon dioxide in the same manner as in Reference Example 5. The bubbling was performed at 2 for 10 seconds. During the contact, the temperatures of the mixed liquids were maintained at 5°C, 20°C, 30°C, 40°C, 50°C, 60°C, 70°C, and 80°C, respectively, using Unithermo Shaker NTS-120, EYLEA, (Tokyo Rikakikai Co., Ltd.). After the contact, the precipitation amount was calculated in the same manner as in Reference Example 5.

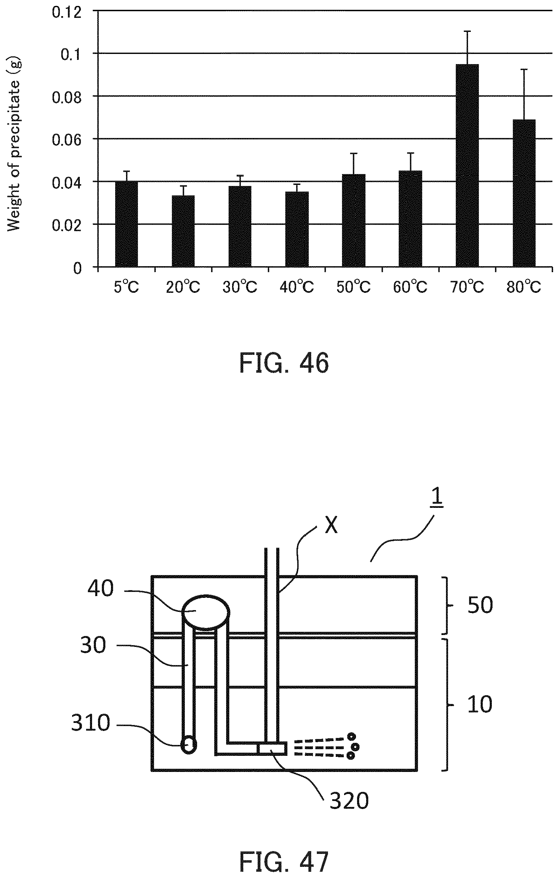

The results are shown in FIG. 46. FIG. 46 is a graph showing the weight of the precipitate produced in the mixed liquid due to contact with the carbon dioxide. In FIG. 46, the vertical axis indicates the weight (g) of the precipitate per test tube, and the horizontal axis indicates the temperature. 3 to 5 experiments were carried out for each temperature, and the measured values of 4 to 8 samples were acquired in each experiment, the average of these measured values was determined to be the weight of the precipitate. As shown in FIG. 46, the precipitate was produced after contact with the carbon dioxide under any temperature condition. The precipitation amount was almost constant when the temperature of the mixed liquid was between 5°C and 60°C, and was greatly increased when the temperature of the mixed liquid was at 70°C. Even when the temperature of the mixed liquid was 80°C, the value of the precipitation amount was larger than the constant value obtained when the temperature of the mixed liquid was between 5°C and 60°C.

As described above, it was verified that carbon dioxide can be fixed by bringing a mixed liquid containing sodium hydroxide and calcium chloride into contact with a gas containing carbon dioxide under a predetermined temperature condition. In particular, it was verified that the fixation of the carbon dioxide is suitable for treatment at high temperatures.

### Reference Example 12

It was examined that carbon dioxide can be fixed using a carbon dioxide fixation apparatus of the present invention.

A fixation apparatus for carbon dioxide shown in FIG. 47 was produce as follows. As the first reaction vessel 10, a plastic vessel having a size (a height of 73 cm, a depth of 41 cm, and a width of 51 cm) and a capacity of about 76 1 was used. The first reaction vessel 10 was installed in a metal rack (commercially available one). A hose (commercially available one) and a pipe (commercially available one) were used as the liquid circulation flow path 30, and the hose and the pipe were connected to the pump 40 (Iwaki Magnet Pump MD-100R-5M). The pump 40 was installed in the upper space of the rack (housing portion 50). A strainer (commercially available one) was connected to a liquid suction end portion 310 of the pipe, and an aspirator (product number: 1-689-04, manufactured by AS ONE Corporation.) was connected to a liquid discharge end portion 320 of the hose, and each of them was installed in the first reaction vessel 10. Further, the aspirator was connected to a hose X for gas intake, and the other end of the hose X was passed through the outside from the hole provided on the ceiling of the rack. As a result, the atmosphere taken in from the outside was taken in by the liquid in the liquid circulation flow path 30 by the aspirator, and was ejected from the liquid discharge end portion 320.

Further, a hole (diameter: 6cm) (not shown) was provided on the side surface of the upper space of the first reaction vessel 10 so as to be at a position of 7 cm from the liquid level, and a vinyl chloride pipe was passed through the hole to release the gas in the upper space out of the first reaction vessel 10. Then, the carbon dioxide concentration in the discharged gas was measured by the carbon dioxide monitor (GX-6000, manufactured by RIKEN KEIKI Co., Ltd.).

40 1 of water was fed into the first reaction vessel 10, 2 1 of a 1 N sodium hydroxide solution was fed by an operator. Immediately after the feeding, the pump 40 was operated to suck the solution from the liquid suction end portion 310 and to discharge the sucked solution from the liquid discharge end portion 320. Immediately thereafter, 2 1 of a solution containing 1 mol/l calcium chloride was fed by the operator. After the feeding, the lid of the first reaction vessel 10 was closed in order to prevent the gas from entering and leaving. The time point at which the solution containing the calcium chloride was fed was set as 0 minutes, and the elapsed time was measured.

As a result, the carbon dioxide concentration was 400 PPM at the feeding time point (0 minutes). Then, the carbon dioxide concentration dropped sharply immediately after the feeding, the carbon dioxide concentration at 20 seconds after the feeding was 280 PPM, the carbon dioxide concentration at 30 seconds after the feeding was 260 PPM, the carbon dioxide concentration at 40 seconds after the feeding was 220 PPM, the carbon dioxide concentration at 50 seconds after the feeding was 200 PPM, the carbon dioxide concentration at 60 seconds after the feeding was 180 PPM, the carbon dioxide concentration at 1 minute and 20 seconds after the feeding was 160 PPM, the carbon dioxide concentration at 1 minute and 40 seconds after the feeding was 140 PPM, the carbon dioxide concentration at 2 minutes after the feeding was 100 PPM, the carbon dioxide concentration at 2 minutes and 20 seconds after the feeding was 80 PPM, the carbon dioxide concentration at 2 minutes and 40 seconds after the feeding was 60 PPM, the carbon dioxide concentration at 3 minutes after the feeding was 40 PPM, and the carbon dioxide concentration at 3 minutes and 20 seconds after the feeding was 20 PPM. Then, the carbon dioxide concentration became 0 PPM at 3 minutes and 45 seconds after the feeding. Thereafter, when the measurement was performed until 10 minutes after the feeding, the carbon dioxide concentration was 0 PPM at any elapsed time.

As described above, it was verified that carbon dioxide can be fixed using the carbon dioxide fixation apparatus of the present invention.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

### Industrial Applicability

As described above, the present invention can provide a new method for fixing carbon dioxide. Therefore, the present invention can be extremely useful in the process of combustion exhaust gas containing carbon dioxide and the like. The present invention can be suitably applied to, for example, a thermal power station.

### Reference Signs List

- 1, 2, 3:: carbon dioxide fixation apparatus
- 10:: reaction vessel
- 10A:: first reaction vessel
- 10B:: second reaction vessel
- 11:: reaction chamber
- 11A:: first reaction chamber
- 11B:: second reaction chamber
- 12:: electrolysis chamber
- 12A:: anode chamber
- 12B:: cathode chamber
- 12C:: intermediate chamber
- 121A:: anode
- 121B:: cathode
- 13A, 13B:: partition wall
- 20A, 20B, 20C:: carbon dioxide fixing agent feeding unit
- 30:: gas feeding unit
- 31:: insertion end portion
- 40A, 40B, 40C:: gas extraction portion
- 50:: liquid extraction portion
- 51:: filter
- 52:: liquid discharge portion
- 53:: pump
- 54:: flow rate adjustment unit
- 60:: liquid circulation flow path
- 61:: liquid suction end portion
- 62:: liquid discharge end portion
- 63:: aspirator
- 64:: flow rate adjustment unit
- 70:: pump
- 80, 80A, 80B:: vessel communication flow path
- 81, 81A, 81B:: pump
- 82, 82A, 82B:: flow rate adjustment unit
- 83:: aspirator

## Claims

1. A method for fixing carbon dioxide, comprising:
a contact step of bringing a mixed liquid containing at least one of sodium hydroxide or potassium hydroxide and further containing at least one of a chloride of a Group 2 element or a chloride of a divalent metal element into contact with a gas containing carbon dioxide; and
an electrolysis step of electrolyzing the mixed liquid after the contact to prepare a mixed liquid after the electrolysis, wherein
in the contact step, the mixed liquid after the electrolysis is reused as the mixed liquid.

2. The method for fixing carbon dioxide according to claim 1, wherein
at least one of the chloride of a Group 2 element or the chloride of a divalent metal element is calcium chloride.

3. The method for fixing carbon dioxide according to claim 1 or 2, wherein
in the contact step, the mixed liquid and the gas are brought into contact with each other by feeding the gas into the mixed liquid.

4. The method for fixing carbon dioxide according to any one of claims 1 to 3, wherein
at least one of the sodium hydroxide or the potassium hydroxide is sodium hydroxide, and
a concentration of the sodium hydroxide in the mixed liquid is less than 0.2 N.

5. The method for fixing carbon dioxide according to claim 4, further comprising:
a concentration adjustment step of detecting a pH of the mixed liquid and maintaining the concentration of the sodium hydroxide in the mixed liquid at less than 0.2 N based on the detected pH.

6. The method for fixing carbon dioxide according to any one of claims 1 to 5, wherein
at least one of the sodium hydroxide or the potassium hydroxide is sodium hydroxide, and
the concentration of the sodium hydroxide in the mixed liquid is 0.05 N or more.

7. The method for fixing carbon dioxide according to any one of claims 1 to 6, wherein
at least one of the chloride of a Group 2 element or the chloride of a divalent metal element is calcium chloride, and
a concentration of the calcium chloride in the mixed liquid is 0.05 mol/l or more.

8. The method for fixing carbon dioxide according to any one of claims 1 to 7, wherein
a temperature of the mixed liquid is 70°C or more.

9. The method for fixing carbon dioxide according to any one of claims 1 to 8, wherein
the contact step comprises:
a first contact step of bringing a solution containing at least one of sodium hydroxide or potassium hydroxide into contact with a gas containing carbon dioxide; and
a second contact step of adding at least one of a chloride of a Group 2 element or a chloride of a divalent metal element to the solution after the first contact step,
wherein
in the electrolysis step, after the second contact step, a mixed liquid containing the solution containing at least one of sodium hydroxide or potassium hydroxide and containing at least one of the chloride of a Group 2 element or the chloride of a divalent metal element is electrolyzed, and
in the first contact step, the mixed liquid after the electrolysis is reused as the solution containing at least one of sodium hydroxide or potassium hydroxide.

10. A method for producing fixed carbon dioxide, comprising:
a fixation step of fixing carbon dioxide, wherein
the fixation step is carried out by the method for fixing carbon dioxide according to any one of claims 1 to 9.

11. A carbon dioxide fixation apparatus, comprising:
a reaction vessel;
a carbon dioxide fixing agent feeding unit; and
a gas-liquid mixing unit, wherein
the carbon dioxide fixing agent feeding unit can feed the carbon dioxide fixing agent into the reaction vessel,
the reaction vessel comprises a reaction chamber and an electrolysis chamber,
the reaction chamber can contain a carbon dioxide fixing agent,
the gas-liquid mixing unit can mix a gas containing carbon dioxide into the carbon dioxide fixing agent contained in the reaction chamber,
the electrolysis chamber comprises an anode chamber and a cathode chamber,
a liquid can be fed from the reaction chamber to the electrolysis chamber and from the electrolysis chamber to the reaction chamber,
in the reaction chamber, the carbon dioxide fixing agent and carbon dioxide are reacted with each other,
the carbon dioxide fixing agent after the reaction can be fed from the reaction chamber to the electrolysis chamber,
in the electrolysis chamber, the carbon dioxide fixing agent after the reaction is electrolyzed,
the carbon dioxide fixing agent after the electrolysis can be fed from the electrolysis chamber to the reaction chamber, and
in the reaction chamber, the carbon dioxide fixing agent after the electrolysis is reusable as the carbon dioxide fixing agent.

12. The carbon dioxide fixation apparatus according to claim 11, wherein
the gas-liquid mixing unit is inserted into the reaction chamber, a plurality of holes are provided at an insertion end portion, and the gas can be discharged from the plurality of holes into the carbon dioxide fixing agent in the reaction chamber.

13. The carbon dioxide fixation apparatus according to claim 11 or 12, wherein
the gas-liquid mixing unit comprises a liquid circulation flow path and a pump,
the liquid circulation flow path comprises a liquid suction end portion and a liquid discharge end portion,
the liquid suction end portion is inserted into the electrolysis chamber,
the liquid discharge end portion is inserted into the reaction chamber,
the pump can suck the carbon dioxide fixing agent from the liquid suction end portion and can discharge the sucked carbon dioxide fixing agent from the liquid discharge end portion.

14. The carbon dioxide fixation apparatus according to claim 13, wherein
the liquid circulation flow path further comprises a gas-liquid mixing member, and
the gas-liquid mixing member can mix the gas into a liquid flowing through the liquid circulation flow path.

15. The carbon dioxide fixation apparatus according to any one of claims 11 to 14, wherein
the reaction vessel comprises a first reaction vessel and a second reaction vessel,
the first reaction vessel comprises the reaction chamber, and
the second reaction vessel comprises the electrolysis chamber.

16. The carbon dioxide fixation apparatus according to any one of claims 11 to 15, wherein
the gas-liquid mixing unit is inserted into the reaction chamber, and an insertion end portion is coated with at least one of a water repellent or an electronegative material.
